(19) Europäisches Patentamt / European Patent Office / Office européen des brevets

(11) **EP 3 976 344 B1**

(12) **EUROPÄISCHE PATENTSCHRIFT**

(45) Veröffentlichungstag und Bekanntmachung des Hinweises auf die Patenterteilung:
**30.04.2025 Patentblatt 2025/18**

(21) Anmeldenummer: **20736915.8**

(22) Anmeldetag: **03.06.2020**

(51) Internationale Patentklassifikation (IPC):
**B29C 59/04** (2006.01)     **B29C 43/22** (2006.01)
**B29C 37/00** (2006.01)     **B29C 35/08** (2006.01)
**B29C 35/10** (2006.01)     **B29C 43/34** (2006.01)
**B29C 43/46** (2006.01)     **B05C 1/08** (2006.01)

(52) Gemeinsame Patentklassifikation (CPC):
**B29C 59/046; B29C 37/0067; B29C 43/222;**
B05C 1/0808; B29C 35/0888; B29C 35/10;
B29C 2035/0827; B29C 2043/3483; B29C 2043/463

(86) Internationale Anmeldenummer:
**PCT/EP2020/065316**

(87) Internationale Veröffentlichungsnummer:
**WO 2020/245172 (10.12.2020 Gazette 2020/50)**

(54) **VERFAHREN ZUR ÜBERTRAGUNG VON PRÄGESTRUKTUREN AUF BESCHICHTUNGSMITTEL UNTER VORBEHANDLUNG DES HIERZU EINGESETZTEN PRÄGEWERKZEUGS**

METHOD FOR APPLYING EMBOSSED STRUCTURES TO COATING MEDIA WHILE PRE-TREATING THE EMBOSSING TOOL USED THEREFOR

PROCÉDÉ POUR TRANSFÉRER DES STRUCTURES D'IMPRESSION SUR DES MOYENS DE REVÊTEMENT AVEC PRÉ-TRAITEMENT DE L'OUTIL D'IMPRESSION EMPLOYÉ À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2019 DE 102019003847**

(43) Veröffentlichungstag der Anmeldung:
**06.04.2022 Patentblatt 2022/14**

(73) Patentinhaber: **BASF Coatings GmbH**
**48165 Münster (DE)**

(72) Erfinder:
• **KUES, Jan-Bernd**
  **48165 Münster (DE)**
• **PIONTEK, Susanne**
  **48165 Münster (DE)**
• **EXNER, Joerg**
  **48165 Münster (DE)**
• **KLEINE-BLEY, Birgit**
  **48165 Münster (DE)**
• **GARCIA MARTIN, Alberto**
  **48165 Münster (DE)**
• **NOATSCHK, Jens-Henning**
  **48165 Münster (DE)**
• **LORENZ, Michael**
  **04155 Leipzig (DE)**
• **VON DER AA, Robert**
  **04451 Borsdorf (DE)**
• **BERGMANN, Frank**
  **06114 Halle (DE)**
• **SCHIPPER, Wilfried**
  **23898 Sandesneben (DE)**

(74) Vertreter: **BASF IP Association**
**BASF SE**
**GBI-C006**
**67056 Ludwigshafen (DE)**

(56) Entgegenhaltungen:
**US-A1- 2012 301 569     US-A1- 2013 140 744**
**US-A1- 2014 110 371**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Übertragung einer Prägestruktur, welches wenigstens die Schritte (1-i) und (2-i) oder (1-ii) und (2-ii) umfasst, wobei die Schritte (1-i) und (2-i) oder (1-ii) und (2-ii) unter Verwendung eines wenigstens eine Prägematrize (p1) aufweisenden Prägewerkzeugs (P1) durchgeführt werden, wobei die Prägematrize (p1) des Prägewerkzeugs (P1) vor der Durchführung von Schritt (2-i) bzw. vor der Durchführung von Schritt (1-ii) mit wenigstens einem organischen Lösemittel und/oder wenigstens einem Reaktivverdünner vorbehandelt wird, sowie eine Verwendung eines entsprechenden vorbehandelten wenigstens eine Prägematrize (p1) aufweisenden Prägewerkzeugs (P1) zwecks einer solchen Übertragung einer Prägestruktur.

## Stand der Technik

Es ist in der Technik heute in vielen Anwendungen üblich, Werkstücke auf ihrer Oberfläche mit Strukturen zu versehen, deren strukturelle Ausprägungen sich im Mikrometer- oder sogar im Nanometer-Bereich bewegen. Derartige Strukturen werden auch als Mikrostrukturen (Strukturen mit Ausprägungen im Mikrometerbereich) oder Nanostrukturen (Strukturen mit Ausprägungen im Nanometerbereich) bezeichnet. Derartige Strukturen werden z.B. eingesetzt, um Werkstoffoberflächen hinsichtlich optischer, bionischer und/oder haptischer Eigenschaften zu beeinflussen. Solche Strukturen werden auch als Prägungen oder Prägestrukturen bezeichnet.

Eine gängige Methode ist es dabei, diese Strukturen in einen Lack zu übertragen. Die Übertragung der Strukturen in den Lack wird hierbei häufig mit einem Prägevorgang erreicht, bei dem eine Matrize, die auf einer Prägeoberfläche bzw. Übertragungsoberfläche die auszubildenden Mikro- und/oder Nanostrukturen in einer Negativform enthält, mit dem Lack in Kontakt gebracht und in diesen eingedrückt wird. Um die Strukturen dann auf der Oberfläche des Werkstückes dauerhaft auszubilden und zu erhalten, wird der Lack typischerweise *in situ* gehärtet.

Dabei werden gerade im Bereich der Haptik und Bionik insbesondere Mikrostrukturen im Bereich von >40 $\mu$m und einem Aspektverhältnis >1 erzeugt. Als Aspektverhältnis wird das Verhältnis aus der Höhe einer Struktur und dessen Durchmesser bezeichnet. Die Strukturelemente der Feinstruktur einer Lotusblume sind beispielsweise ca. 10-20 $\mu$m hoch und ca. 10-15 $\mu$m breit und die Strukturelemente der Feinstruktur eines Gecko-Fußes sind ca. 100 $\mu$m hoch und ca. 1 $\mu$m breit (vgl. E. Arzt et al., PNAS 2003, 100, 10603-10606).

US 2014/110371 A1 offenbart ein Verfahren zur Übertragung einer Prägestruktur unter Verwendung eines Prägewerkzeugs.

In DE 10 2004 012 067 A1 wird ein Verfahren zur Herstellung von Haftelementen auf einem Trägermaterial unter Einsatz von Kunststoffmaterialien wie Elastomeren beschrieben, die Strukturen im Mikrometerbereich aufweisen.

WO 2005/047549 A1 beschreibt veloureartige, feinfaserige Oberflächen, die Feinstrukturen in Form von Erhöhungen mit einer Länge von 110 $\mu$m und einem Durchmesser von 3-60 $\mu$m aufweisen können. Zur Erzeugung solcher feinstrukturierten velourartigen Oberflächen wird eine Polymerdispersion auf eine Trägerfläche mit entsprechender Negativstruktur aufgebracht und gehärtet, so dass die Beschichtungsmasse die Feinstrukturierung annimmt. Nachteilig an dem Verfahren ist unter anderem, dass es sich dabei um einen diskontinuierlichen Prozess handelt.

DE 10 2007 061 980 A1 offenbart ein Verfahren zum Erzeugen einer Mikrostruktur, bei dem eine Werkzeugform in Form einer bahnförmigen Kunststofffolie bereitgestellt wird, deren Oberfläche eine Anordnung von Erhebungen und Vertiefungen in Gestalt der gewünschten Mikrostruktur aufweist, die Vertiefungen mit einem härtbaren ersten Lack befüllt werden, die Oberfläche der Kunststofffolie mit einer Schicht aus einem härtbaren zweiten Lack in Kontakt gebracht wird, der in Kontakt mit dem zweiten Lack stehende erste Lack in den Vertiefungen der Kunststofffolie zusammen mit der Schicht aus dem zweiten Lack gehärtet und dabei mit der Schicht aus zweitem Lack verbunden wird und die Oberfläche der Kunststofffolie wieder von dem zweiten gehärteten Lack entfernt wird, so dass der mit dem zweiten Lack verbundene, gehärtete erste Lack aus den Vertiefungen der Kunststofffolie gezogen wird. Das Verfahren wird zur Herstellung von Sicherheitselementen mit mikrooptischen Strukturen wie mikrooptischen Moiré-Vergrößerungsanordnungen, eingesetzt. Die Strukturtiefe der Mikrostruktur gemäß DE 10 2007 061 980 A1 liegt dabei in einem Bereich von 1 bis maximal 20 $\mu$m.

Kontinuierliche Verfahren zur Übertragung von Prägestrukturen auf Beschichtungsmaterialien, bei denen beispielsweise eine Rolle-zu-Rolle-Druckmaschine mit einer Prägevorrichtung, die auf ihrer Oberfläche eine Negativstruktur trägt, ausgestattet wird und bei denen diese Struktur auf ein Beschichtungsmaterial übertragen wird, sind im Stand der Technik bekannt, vor allem im Bereich der Herstellung optischer Filme und im Bereich des Sicherheitsdrucks (Hologramme). Für einen wirtschaftlichen Prozess mit möglichst hoher Abformgenauigkeit (möglichst exakte Replikation der Negativstruktur ohne große Verluste) hat sich die Verwendung von insbesondere strahlenhärtbaren Beschichtungsmaterialien als besonders Vorteilhaft herausgestellt. Solche Beschichtungsmaterialien ermöglichen, dass das eingesetzte flüssige Beschichtungsmaterial zumindest teilweise ausgehärtet wird, während es sich noch im Kontakt mit dem Prägewerkzeug wie einer Prägewalze befindet, wodurch eine gute Strukturtreue bei hohen Bandgeschwindigkeiten erzielt wird. Solche Verfahren sind beispielsweise in der WO 88/09252 A1 und der WO 94/18609 A1 beschrieben. Auch in der WO 2009/121357 A1 wird ein solches Verfahren zur Erzeugung optischer Filme offenbart, bei dem das Beschichtungsmaterial zuerst über bekannte Auftragsverfahren auf einen Trägerfilm aufgebracht und anschließend geprägt wird. Ein vergleichbares Verfahren wird z.B. auch in der DE 41 32 476 A1 offenbart.

Nachteilig an diesen bekannten vorgenannten Verfahren ist jedoch zum einen, dass das Beschichtungsmaterial zumindest in einigen dieser Verfahren zunächst auf das Prägewerkzeug aufgebracht wird und dann von dort auf das Substrat übertragen wird. Hierdurch resultieren Einschränkungen dieser Verfahren in Bezug auf die gewünschte Schichtdicke des Lackmaterials, so dass Prägestrukturen mit einer Strukturtiefe >40 $\mu$m nur unzureichend abgeformt werden. Zum anderen ist an diesen bekannten vorgenannten Verfahren nachteilig, dass diese nicht in ausreichendem Maße dazu geeignet sind, Prägungen insbesondere im Mikrometerbereich zu übertragen, ohne dabei die Abformgenauigkeit insgesamt in einem inakzeptablen Maß herabzusetzen, und zwar insbesondere dann, wenn Prägestrukturen mit einer Strukturtiefe >40 $\mu$m abgeformt werden sollen. Eine Erhöhung des Drucks, mit dem das eingesetzte Prägewerkzeug auf die Beschichtungsmasse gepresst wird, kann dabei nicht zu einer erhöhten Abformgenauigkeit führen, da dies oftmals eine Verklammerung/Verzahnung der Prägematrize des Prägewerkzeugs in der geprägten Beschichtung mit sich bringt, was dazu führt, dass eine höhere Kraft erforderlich ist, um das beschichtete Substrat mit entsprechender Feinstrukturierung von dem Prägewerkzeug zu trennen. Dies kann wiederum dazu führen, dass zumindest einzelne Strukturelemente dieser Feinstrukturierung durch ein Abreißen bzw. durch Auftreten eines Kohäsionsbruchs beim Trennvorgang zerstört werden, und zwar insbesondere dann, wenn die Negativstruktur innerhalb der Prägematrize vollständig ausgefüllt ist. Dadurch wird nicht nur die Prägestruktur nicht korrekt ausgeprägt, sondern zusätzlich das Prägewerkzeug verunreinigt, was eine aufwendige Säuberung oder Erneuerung mit sich bringt. Zudem besteht bei einer Druckerhöhung beim Prägevorgang, d.h. bei einem erhöhten Anpressdruck, die Gefahr, dass das eingesetzte Beschichtungsmaterial nur unzureichend in die Vertiefungen der Prägematrize gepresst wird, da das Beschichtungsmaterial an den Seiten bzw. an dem Rand des damit beschichteten Substrats verdrängt wird. Zudem kann die in den Löchern der Prägematrize verbleibende Luft nicht beliebig komprimiert werden, so dass oftmals die Abformungen nicht der durch die Matrize vorgegebenen Form entsprechen, wodurch es zu einer unerwünschten Kraterbildung kommen kann. Insbesondere durch große eingeschlossene Luftblasen wird die Stabilität der Prägestruktur üblicherweise wesentlich schlechter, was eine geringe Abriebfestigkeit bereits bei nur geringer mechanischer Belastung der Oberfläche zur Folge hat.

Es besteht daher ein Bedarf an einem Verfahren zur Übertragung von Prägestrukturen, das die vorgenannten Nachteile nicht aufweist.

## Aufgabe

Eine Aufgabe der vorliegenden Erfindung ist es daher, ein Verfahren zur Übertragung von Prägestrukturen, insbesondere von solchen mit hohem Aspektverhältnis, von einem Prägewerkzeug auf Beschichtungsmittel und auf solche Beschichtungsmittel aufweisende Substrate zur Verfügung zu stellen, - insbesondere ein solches, mit dem entsprechende Mikro- und/oder Nanostrukturen, im Besonderen Mikrostrukturen, übertragen werden können, - welches eine ausreichende Abformgenauigkeit bei der Übertragung der Prägestrukturen ermöglicht, so dass bei der Prägung keine Modulationstiefe verloren geht, und welches insbesondere die Erzeugung einer möglichst wiederverwertbaren Prägematrize zur Übertragung der Prägestrukturen ermöglicht bzw. unter Einsatz einer solchen Prägematrize durchgeführt werden kann. Gleichzeitig und insbesondere sollen die zu übertragenden Prägestrukturen in möglichst hohem Maße repliziert werden können und möglichst defektfrei, insbesondere ohne das Auftreten von Kratern, übertragen werden können, und das Verfahren insbesondere keine durch unerwünschte oder nicht ausreichende Eigenschaften der eingesetzten Beschichtungsmittel und Beschichtungen wie beispielsweise einer nicht ausreichenden Haftung hervorgerufenen Nachteile aufweisen.

## Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist daher ein Verfahren zur Übertragung einer Prägestruktur unter Verwendung eines Prägewerkzeugs (P1), welches wenigstens die Schritte (1-i) und (2-i) oder (1-ii) und (2-ii) umfasst, nämlich

(1-i) Applizieren eines Beschichtungsmittels (B1a) auf wenigstens einen Teil einer Oberfläche eines Substrats (F1) unter Erhalt eines Verbunds (B1aF1) und

(2-i) zumindest teilweises Prägen des zumindest teilweise auf die Oberfläche des Substrats (F1) applizierten Beschichtungsmittels (B1a) mittels wenigstens eines wenigstens eine Prägematrize (p1) aufweisenden Prägewerkzeugs (P1), oder

(1-ii) Applizieren eines Beschichtungsmittels (B1a) auf wenigstens einen Teil einer zumindest teilweise geprägten Oberfläche einer Prägematrize (p1) eines Prägewerkzeugs (P1) und

(2-ii) Applizieren eines Substrats (F1) auf wenigstens einen Teil der Oberfläche des auf die Prägematrize (p1) applizierten Beschichtungsmittels (B1a) unter Erhalt eines auf (p1) befindlichen Verbunds (B1aF1),

dadurch gekennzeichnet, dass die wenigstens eine Prägematrize (p1) des Prägewerkzeugs (P1) vor der Durchführung von Schritt (2-i) und vor der Durchführung von Schritt (1-ii) mit wenigstens einem organischen Lösemittel und/oder wenigstens einem Reaktivverdünner vorbehandelt wird, und vorzugsweise durch Schritt (2-i) und Schritt (1-ii) Mikrostrukturen als Prägestruktur auf das Beschichtungsmittel (B1a) übertragen werden, die eine Strukturtiefe >30 µm aufweisen.

Ein weiterer Gegenstand der vorliegenden Erfindung ist eine Verwendung eines wenigstens eine Prägematrize (p1) aufweisenden Prägewerkzeugs (P1) zur Übertragung einer Prägestruktur auf wenigstens einen Teil einer Oberfläche eines Beschichtungsmittel (B1a), dadurch gekennzeichnet, dass die wenigstens eine Prägematrize (p1) des Prägewerkzeugs (P1) vor der Übertragung mit wenigstens einem organischen Lösemittel und/oder wenigstens einem Reaktivverdünner vorbehandelt worden ist, und als Prägestruktur vorzugsweise Mikrostrukturen auf das Beschichtungsmittel (B1a) übertragen werden, die eine Strukturtiefe >30 µm aufweisen.

Es wurde überraschend gefunden, dass es das erfindungsgemäße Verfahren - und insbesondere die vor der Durchführung von Schritt (2-i) und vor der Durchführung von Schritt (1-ii) zu erfolgende Vorbehandlung - ermöglicht, Prägestrukturen, insbesondere Mikrostrukturen, in einer sehr hohen Abformgenauigkeit auch in hoher Geschwindigkeit auf das zu prägende Beschichtungsmittel zu übertragen, so dass bei der Prägung keine Modulationstiefe verloren geht. Dabei wurde insbesondere überraschend gefunden, dass es das erfindungsgemäße Verfahren ermöglicht, Mikrostrukturen als Prägestruktur mit Strukturtiefen >30 µm, insbesondere >40 µm und Aspektverhältnissen >1 formgetreu und mit hoher Geschwindigkeit von einem Prägewerkzeug, welches die Negativstruktur der zu übertragenden Prägestruktur auf seiner Oberfläche trägt, auf ein Beschichtungsmaterial zu übertragen.

Insbesondere hat sich überraschenderweise gezeigt, dass der Einsatz herkömmlicher aus dem Stand der Technik bekannter Verfahren zur Übertragung von insbesondere haptischen Prägestrukturen nur zu einer unvollständigen Abformung führt, d.h. die Oberflächenstruktur auf dem Beschichtungsmaterial nicht in ausreichendem Maße dem Positiv des Negativs auf der Prägevorrichtung entspricht, da oftmals die Anordnung und Dimension der einzelnen Strukturelemente des Negativs der zu übertragenden Prägestruktur dafür sorgt, dass beim Prägevorgang die Luft nicht zu den Seiten hin entweichen kann und somit häufig in den Vertiefungen als Abstandshalter zwischen Beschichtungsmaterial und unterstem Punkt der jeweiligen Strukturelemente verbleibt, wodurch insbesondere die Spitzen nicht abgebildet werden und die einzelnen übertragenen Strukturelemente Krater aufweisen. Diese Nachteile werden überraschenderweise durch das erfindungsgemäße Verfahren und insbesondere die vor der Durchführung von Schritt (2-i) und vor der Durchführung von Schritt (1-ii) zu erfolgende Vorbehandlung umgangen. Überraschenderweise hat sich dabei insbesondere herausgestellt, dass auch bei vergleichsweise hoher Strukturtiefe und vergleichsweise hohem Aspektverhältnis der zu übertragenden Prägestrukturen genau solche Strukturen mit hoher Abformgenauigkeit übertragen werden können, die einzelne Strukturelemente aufweisen, die nicht miteinander verbunden sind, sondern zumindest teilweise als einzelne "Löcher" auf der Oberfläche der Prägematrize des Prägewerkzeugs vorliegen. Obwohl bei einer solchen Anordnung der Strukturelemente innerhalb der Prägematrize beim Prägevorgang die Luft nicht zu den Seiten hin entweichen kann, sondern stattdessen aus den einzelnen Strukturelementen ("Löchern") herausgedrängt werden muss, ermöglicht das erfindungsgemäße Verfahren überraschenderweise eine defektfreie Übertragung der Prägestruktur, insbesondere ohne Kraterbildung.

**Ausführliche Beschreibung**

Der Begriff "umfassend" im Sinne der vorliegenden Erfindung im Zusammenhang mit den erfindungsgemäß eingesetzten Beschichtungsmitteln wie beispielsweise dem Beschichtungsmittel (B1a) und dem erfindungsgemäßen Verfahren und dessen Verfahrensschritten hat vorzugsweise die Bedeutung "bestehend aus". Dabei können beispielsweise hinsichtlich des erfindungsgemäß eingesetzten Beschichtungsmittels (B1a) neben den darin enthaltenen Komponenten wie den Komponenten (a) und/oder (b) und/oder (c) zudem eine oder mehrere der weiteren nachstehend genannten optional in dem erfindungsgemäß eingesetzten Beschichtungsmittel (B1a) enthaltenen Komponenten in diesem enthalten sein. Alle Komponenten können dabei jeweils in ihren nachstehend genannten bevorzugten Ausführungsformen vorliegen. Hinsichtlich des erfindungsgemäßen Verfahrens kann dieses dabei neben den Schritten (1-i) und (2-i) oder (1-ii) und (2-ii) sowie dem Schritt der Vorbehandlung weitere optionale Verfahrensschritte aufweisen wie zum Beispiel die Schritte (3) und (4).

*Erfindungsgemäßes Verfahren zur Übertragung einer Prägestruktur umfassend wenigstens die Schritte (1-i) und (2-i) oder (1-ii) und (2-ii) sowie optional (3) und optional (4)*

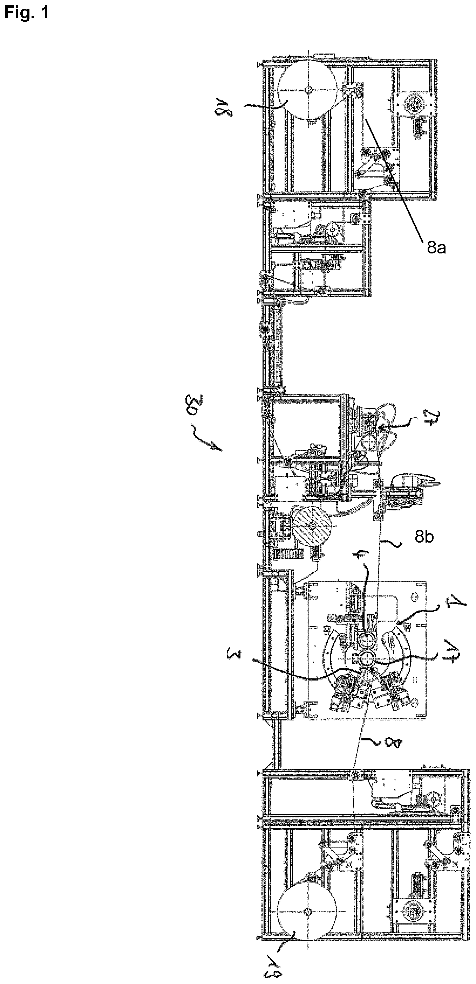

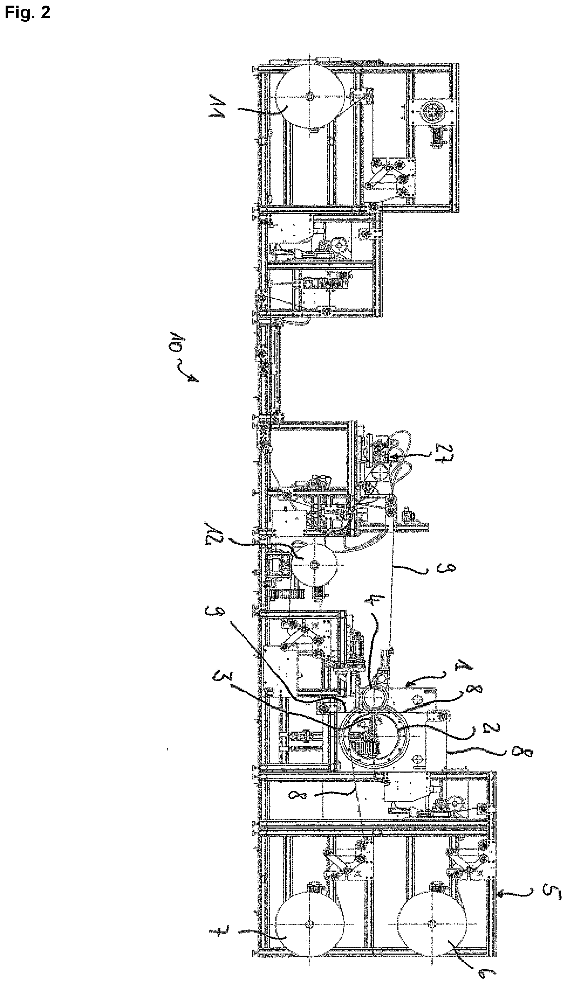

Ein erster Gegenstand der vorliegenden Erfindung ist wie vorstehend ausgeführt das erfindungsgemäße Verfahren zur Übertragung einer Prägestruktur auf wenigstens einen Teil einer Oberfläche eines Beschichtungsmittels (B1a). In **Fig. 1** und **Fig. 2** sind die Schritte (1-i) und (2-i) sowie optional (3) und optional (4) des erfindungsgemäßen Verfahrens beispielhaft illustriert, wie auch der nachstehenden Beschreibung dieser Figuren zu entnehmen ist. Das erfindungsgemäße Verfahren umfasst zwingend die vorgenannte Vorbehandlung.

Vorzugsweise ist das erfindungsgemäße Verfahren ein kontinuierliches Verfahren.

Die Prägestruktur wird durch das zumindest teilweise Prägen des zumindest teilweise auf die Oberfläche des Substrats (F1) applizierten Beschichtungsmittels (B1a) gemäß Verfahrensschritt (2-i) übertragen bzw. erhalten. Alternativ ist eine Übertragung mittels der Verfahrensschritte (1-ii) und (2-ii) möglich. Unter dem Begriff "Prägung" bzw. unter dem Begriff "Prägen" wird dabei die zumindest teilweise Ausrüstung des Beschichtungsmittels (B1a), optional als Teil eines Verbunds (B1aF1), an zumindest einem Teil seiner Oberfläche mit einer Prägestruktur bezeichnet. Dabei wird wenigstens ein bestimmtes Areal des Beschichtungsmittels (B1a) mit einer Prägestruktur ausgerüstet. Vorzugsweise wird die gesamte Oberfläche des Beschichtungsmittels (B1a), optional als Teil des Verbunds (F1B1a), mit einer Prägestruktur ausgerüstet.

Die Prägestrukturen der Verbünde (F1B1a) und (F1B1) beruhen vorzugsweise jeweils unabhängig voneinander auf einem wiederkehrenden und/oder regelmäßig angeordneten Muster. Es kann sich dabei jeweils um eine durchgehende Prägestruktur wie eine durchgehende Rillenstruktur oder um mehrere vorzugsweise wiederkehrende Einzelprägestrukturen handeln. Die jeweiligen Einzelprägestrukturen können dabei vorzugsweise wiederum auf einer Rillenstruktur basieren, welche mehr oder weniger stark ausgeprägte Stege (Prägeerhebungen) aufweist, durch welche die Prägehöhe der Prägestruktur definiert wird. Entsprechend der jeweiligen Geometrie der Stege einer vorzugsweise wiederkehrenden Einzelprägestruktur können sich in der Aufsicht eine Vielzahl jeweils unterschiedlicher, vorzugsweise wiederkehrender Einzelprägestrukturen ergeben, wie z.B. vorzugsweise schlangen-linienförmige, zackenförmige, hexagonale, diamantenförmige, rautenförmige, parallelogrammförmige, wabenförmige, kreisförmige, punktförmige, sternförmige, leinenförmige, netzförmige, mehreckige, vorzugsweise dreieckige, viereckige, besonders bevorzugt rechteckige und quadratische, fünfeckige, sechseckige, siebeneckige und achteckige, drahtförmige, ellipsenförmige, ovale und gitterförmig gestaltete Muster, wobei sich auch wenigstens zwei Muster überlagern können. Die Stege der Einzelprägestrukturen können auch eine Krümmung, d.h. eine konvexe und/oder oder konkave Struktur aufweisen.

Die jeweilige Prägestruktur kann dabei durch ihre Breite wie die Breite der Stege, also durch ihre Strukturbreite, und durch die Höhe der Prägungen, also durch ihre Strukturhöhe (bzw. Strukturtiefe), beschrieben werden. Die Strukturbreite wie die Breite der Stege kann dabei eine Länge von bis zu einem Zentimeter aufweisen, liegt aber vorzugsweise in einem Bereich von 10 nm bis 1 mm. Die Strukturhöhe liegt vorzugsweise in einem Bereich von 0,1 nm bis 1 mm. Vorzugsweise stellt die jeweilige Prägestruktur jedoch eine Mikro- und/oder Nanostruktur dar. Mikrostrukturen sind dabei Strukturen - sowohl hinsichtlich Strukturbreite als auch Strukturhöhe - mit Ausprägungen im Mikrometerbereich. Nanostrukturen sind dabei Strukturen - sowohl hinsichtlich Strukturbreite als auch Strukturhöhe - mit Ausprägungen im Nanometerbereich. Mikro- und Nanostrukturen sind dabei Strukturen, die eine Strukturbreite im Nanometerbereich und eine Strukturhöhe im Mikrometerbereich oder umgekehrt aufweisen. Die Begriffe Strukturhöhe und Strukturtiefe sind dabei austauschbar.

Vorzugsweise liegt die Strukturbreite der jeweiligen Prägestruktur in einem Bereich von 10 nm bis 500 $\mu$m, besonders bevorzugt in einem Bereich von 25 nm bis 400 $\mu$m, ganz besonders bevorzugt in einem Bereich von 50 nm bis 250 $\mu$m, insbesondere in einem Bereich von 100 nm bis 100 $\mu$m. Vorzugsweise liegt die Strukturhöhe der jeweiligen Prägestruktur in einem Bereich von 10 nm bis 500 $\mu$m, besonders bevorzugt in einem Bereich von 25 nm bis 400 $\mu$m, ganz besonders bevorzugt in einem Bereich von 50 nm bis 300 $\mu$m, insbesondere in einem Bereich von 100 nm bis 200 $\mu$m. Dies gilt jeweils sowohl für die Prägestruktur des Verbunds (F1B1) als auch des Verbunds (F1B1a).

Die mittels des erfindungsgemäßen Verfahrens übertragenen Prägestrukturen sind ganz besonders bevorzugt Mikrostrukturen. Vorzugsweise liegt die Strukturbreite in einem Bereich von 1 $\mu$m bis 500 $\mu$m, besonders bevorzugt in einem Bereich von 2 $\mu$m bis 400 $\mu$m, ganz besonders bevorzugt in einem Bereich von 5 $\mu$m bis 250 $\mu$m, insbesondere in einem Bereich von 10 $\mu$m bis 100 $\mu$m. Vorzugsweise liegt die Strukturhöhe der jeweiligen Prägestruktur in einem Bereich von 1 $\mu$m bis 500 $\mu$m, besonders bevorzugt in einem Bereich von 2 $\mu$m bis 400 $\mu$m, ganz besonders bevorzugt in einem Bereich von 5 $\mu$m bis 300 $\mu$m, insbesondere in einem Bereich von 10 $\mu$m bis 200 $\mu$m. Besonders bevorzugt weisen die zu übertragenen Prägestrukturen zumindest teilweise eine Strukturtiefe (Strukturhöhe) >10 $\mu$m oder >20 $\mu$m auf, ganz besonders bevorzugt >30 $\mu$m oder >40 $\mu$m auf, insbesondere >45 $\mu$m oder >50 $\mu$m auf. Dabei beträgt die maximale Strukturtiefe vorzugsweise jeweils 500 $\mu$m oder 450 $\mu$m oder 400 $\mu$m oder 300 $\mu$m oder 250 $\mu$m.

Vorzugsweise ist das Aspektverhältnis der auf das Beschichtungsmittel (B1a) übertragenen Prägestruktur >1. Der Begriff des Aspektverhältnisses ist dem Fachmann bekannt. Das Aspektverhältnis beschreibt das Verhältnis der Höhe (Tiefe) eines Strukturelements zu seiner lateralen Ausdehnung (Breite). So haben beispielsweise periodisch angeordnete Rechtecke, die eine Höhe von 10 $\mu$m und eine Breite von 5 $\mu$m aufweisen, ein Aspektverhältnis von 2 (10:5). Je größer der Wert des Aspektverhältnisses ist, desto schwieriger ist im Allgemeinen die Herstellung der entsprechend strukturierten Oberfläche. Vorzugsweise ist das Aspektverhältnis der auf das Beschichtungsmittel (B1a) übertragenen Prägestruktur >2 oder >3 oder >5 oder >10, besonders bevorzugt bei >15 oder >20 oder >50. Bei hierarchischen Strukturen gibt das Aspektverhältnis das Aspektverhältnis der größten Hierarchiestufe an.

Die Strukturbreite und Strukturhöhe der jeweiligen Prägestruktur wird dabei gemäß durch eine mechanische Abtastung der Oberfläche bestimmt. Dabei wird die Prägehöhe an mindestens 10 Stellen in einer Linie gleichmäßig über die Bahnbreite der Probe verteilt gemessen, wobei darauf geachtet werden muss, dass das Abtastgerät die Prägestruktur nicht zusammendrückt. Die Bestimmung der Strukturhöhe stellt eine Bestimmung der Abformgenauigkeit dar und erfolgt mittels Rasterkraftmikroskopie gemäß der nachstehend beschriebenen Methode.

Das erfindungsgemäße Verfahren ermöglicht die Durchführung des Verfahrens in hohen Prozessgeschwindigkeiten, vorzugsweise in Geschwindigkeiten im Bereich von 1 bis 150 m/min, besonders bevorzugt von 1,5 bis 100 m/min, ganz besonders bevorzugt von 2 bis 75 m/min, noch bevorzugter von 3 bis 50 m/min, insbesondere von 5 bis 40 m/min, am meisten bevorzugt von 10 bis 25 m/min. Die Prozessgeschwindigkeit bezeichnet dabei vorzugsweise die Bandgeschwindigkeit, mit der das zumindest teilweise mit einem Beschichtungsmittel (B1a) beschichtete Substrat (F1) während der Durchführung des erfindungsgemäßen Verfahrens oder mit der das Substrat (F1) als solches bewegt wird.

Die Beschichtung (B1) des Verbunds (F1B1) bzw. das Beschichtungsmittel (B1a) des Verbunds (F1Ba1a) und die wenigstens eine Prägematrize (p1) des Prägewerkzeugs (P1) weisen vorzugsweise zueinander spiegelbildliche Prägestrukturen auf.

*Alternative (i) umfassend Schritte (1-i) und (2-i)*

Das erfindungsgemäße Verfahren gemäß Alternative (i) umfasst wenigstens die Schritte (1-i), (2-i) sowie optional (3) sowie optional (4).

*Schritt (1-i)*

Schritt (1-i) des erfindungsgemäßen Verfahrens sieht ein Applizieren eines Beschichtungsmittels (B1a) auf wenigstens einen Teil einer Oberfläche eines Substrats (F1) vor. Das Substrat (F1) stellt ein Trägermaterial für das darauf aufzubringende Beschichtungsmittel (B1a) bzw. die darauf aufzubringende Beschichtung (B1) dar.

Das Substrat (F1) oder - falls ein beschichtetes Substrat eingesetzt wird - die an der Oberfläche des Substrats (F1) befindliche Schicht besteht vorzugsweise aus wenigstens einem thermoplastischen Polymer, insbesondere ausgewählt der Gruppe bestehend aus Polymethyl(meth)acrylaten, Polybutyl(meth)acrylaten, Polyethylenterephthalaten, Polybutylenterephthalaten, Polyvinylidenflouriden, Polyvinylchloriden, Polyestern einschließlich Polycarbonaten und Polyvinylacetat, vorzugsweise Polyestern wie PBT und PET, Polyamiden, Polyolefinen wie Polyethylen, Polypropylen, Polystyrol sowie Polybutadien, Polyacrylnitril, Polyacetal, Polyacrylnitrilethylen-propylendienstyrolcopolymeren (A-EPDM), Polyetherimiden, Phenolharzen, Harnstoffharzen, Melaminharzen, Alkydharzen, Epoxidharzen, Polyurethanen einschließlich TPU, Polyetherketonen, Polyphenylensulfiden, Polyethern, Polyvinylalkoholen und deren Mischungen. Besonders bevorzugte Substrate oder an deren Oberfläche befindliche Schichten sind Polyolefine wie z.B. PP (Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-StyrolCopolymere), sowie deren physikalische Mischungen (Blends). Besonders bevorzugt sind PP, SAN, ABS, ASA sowie Blends von ABS oder ASA mit PA oder PBT oder PC. Ganz besonders bevorzugt ist PET, PBT, PP, PE und Polymethylmethacrylat (PMMA) oder schlagzähmodifiziertes PMMA. Insbesondere bevorzugt wird ein Polyester, am meisten bevorzugt PET als Material für das Substrat (F1) eingesetzt. Alternativ kann das Substrat (F1) selbst - gegebenenfalls trotz einer darauf aufgebrachten Schicht aus wenigstens einem der vorstehend genannten Polymere - aus einem anderen Material wie Glas, Keramik, Metall, Papier und/oder Gewebe gefertigt sein. In diesem Fall stellt das Substrat (F1) vorzugsweise eine Platte dar und kann beispielsweise in einer Rolle-zu-Platte-Prägevorrichtung eingesetzt werden.

Die Dicke des Substrates (F1) beträgt vorzugsweise 2 μm bis zu 5 mm. Besonders bevorzugt ist eine Schichtdicke von 25 bis 1.000 μm, insbesondere 50 bis 300 μm.

Bei dem Substrat (F1) handelt es sich vorzugsweise um eine Folie, besonders bevorzugt um eine Folienbahn, ganz besonders bevorzugt um eine Endlos-Folienbahn. In diesem Fall kann das Substrat (F1) vorzugsweise in einer Rolle-zu-Rolle-Prägevorrichtung eingesetzt werden.

Der Begriff "Endlos-Folie" oder "Endlos-Folienbahn" bezeichnet im Sinne der vorliegenden Erfindung vorzugsweise eine Folie mit einer Länge von 100 m bis 10 km.

Vorzugsweise wird das Substrat (F1) bei der Durchführung des Schritts (1-i) (und vorzugsweise auch bei der Durchführung der Schritte (2-i), optional (3) und optional (4) des Verfahrens sowie auch bei der Durchführung der Schritte (1-ii), (2-ii), optional (3) und optional (4) des Verfahrens der Alternative (ii)) bewegt und ist daher ein bewegtes Substrat. Vorzugsweise wird das Substrat (F1) während der Durchführung von Schritt (1-i) und (2-ii) mittels einer Transporteinrichtung wie einem Fließband bewegt. Die entsprechende zur Durchführung von Schritt (1-i) und auch Schritt (2-ii) eingesetzte Vorrichtung umfasst daher vorzugsweise eine solche Transporteinrichtung. Die entsprechende zur Durchführung von Schritt (1-i) eingesetzte Vorrichtung umfasst ferner ein Mittel zum Applizieren des vorzugsweise strahlenhärtbaren Beschichtungsmittels (B1a) auf wenigstens einen Teil einer Oberfläche des Substrats (F1). Für die entsprechende zur Durchführung von Schritt (2-ii) eingesetzte Vorrichtung gilt analoges.

*Schritt (2-i)*

Schritt (2-i) des erfindungsgemäßen Verfahrens sieht ein zumindest teilweises Prägen des zumindest teilweise auf die Oberfläche des Substrats (F1) applizierten Beschichtungsmittels (B1a) mittels wenigstens eines wenigstens eine Prägematrize (p1) aufweisenden Prägewerkzeugs (P1) vor.

Als Prägewerkzeug (P1) kann ein herkömmlicher Druckzylinder eingesetzt werden, der die Negativform der in die Oberfläche des Verbunds (F1B1a) einzuprägenden Prägestruktur trägt. Dieser kann zur zumindest teilweisen Prägung auf den Verbund (F1B1a) gedrückt werden. Die wenigstens eine Prägematrize (p1) des zur zumindest teilweisen Prägung eingesetzten Prägewerkzeugs (P1) weist wie bereits erwähnt eine "Negativstruktur" auf, d.h. das Spiegelbild derjenigen Prägestruktur, die der nach Durchführung von Schritt (2-i) des erfindungsgemäßen Verfahrens erhaltene Verbund (F1B1a) aus einem Substrat (F1) und dem zumindest teilweise geprägten Beschichtungsmittel (B1a) aufweist. Das Prägewerkzeug (P1) ist vorzugsweise ein metallisches Prägewerkzeug, besonders bevorzugt aus Nickel, Stahl oder Kupfer, wobei Kupfer Anteile von Chrom enthalten kann, aber nicht muss. Dementsprechend ist die Prägematrize (p1) vorzugsweise metallisch, besonders bevorzugt aus Nickel, gegebenenfalls zusätzlich enthaltend Anteile an Phosphor. Alternativ können aber auch weiche Materialien wie beispielsweise Polydimethylsiloxane (PDMS) zur Herstellung von (p1) eingesetzt werden.

Vorzugsweise ist in Schritt (2-i) die wenigstens eine Prägematrize (p1) Teil einer als Prägewerkzeug (P1) fungierenden ersten Walze und der zur zumindest teilweisen Prägung eingesetzte Verbund (F1B1a) wird über eine zweite Walze geführt, die der ersten Walze gegenüberliegt und dieser gegenläufig ist. Vorzugsweise erfolgt die zumindest teilweise Prägung gemäß Schritt (2) auf Höhe des Walzenspalts, der durch die beiden einander gegenüberliegenden, gegensinnig drehenden Walzen gebildet wird. Vorzugsweise ist dabei die Prägematrize (p1) des Prägewerkzeugs (P1) dem Beschichtungsmittel (B1a) des Verbunds (F1B1a) zugewandt. Die zumindest teilweise Prägung wird dabei vorzugsweise durch Andrücken oder Anpressen der Prägematrize (p1) auf den Verbund (F1B1a) erzielt.

Als Prägematrize (p1) kann alternativ ein Verbund (B2F2) aus einem Substrat (F2) und einer zumindest teilweise geprägten und zumindest teilweise ausgehärteten Beschichtung (B2) eingesetzt werden, der nachstehend noch näher beschrieben wird. In diesem Fall wird nach der zumindest teilweisen Prägung ein Verbund (F1B1aB2F2) erhalten. Vorzugsweise wird das Prägewerkzeug (P1) einschließlich der Prägematrize (p1) während der Durchführung von Schritt (2-i) wenigstens teilweise auf das applizierte Beschichtungsmittel (B1a) gepresst.

Vorzugsweise ist die in Schritt (2-i) eingesetzte Prägematrize (p1) des Prägewerkzeugs (P1) wiederverwertbar und wiederholt zur Übertragung wenigstens einer Prägestruktur einsetzbar, vorzugsweise innerhalb des erfindungsgemäßen Verfahrens. Vorzugsweise werden durch Schritt (2-i) Mikro- und/oder Nanostrukturen als Prägestruktur auf das Beschichtungsmittel (B1a) übertragen.

Vorzugsweise handelt es sich bei der Prägematrize (p1), also vorzugsweise bei dem Verbund (F2B2), um eine Folienbahn (F2), die eine zumindest teilweise geprägte und zumindest teilweise ausgehärtete Beschichtung (B2) aufweist. Besonders bevorzugt ist das Substrat (F2) eine Endlos-Folienbahn, die die zumindest teilweise geprägte und zumindest teilweise Beschichtung (B2) aufweist, wodurch der als Prägematrize (p1) eingesetzte Verbund (F2B2) eine Endlos-Prägematrize darstellt, und zwar insbesondere dann, wenn auch das Substrat (F1) eine Endlos-Folienbahn ist.

Die wenigstens eine Prägematrize (p1) des zur zumindest teilweisen Prägung gemäß Schritt (2-i) eingesetzten Prägewerkzeugs (P1) weist eine "Negativstruktur" ("Negativform") auf das Spiegelbild derjenigen Prägestruktur, die der nach Durchführung von optionalem Schritt (4) des erfindungsgemäßen Verfahrens erhaltene Verbund (F1B1) aus einem Substrat (F1) und einer zumindest teilweise geprägten und zumindest teilweise ausgehärteten Beschichtung (B1) aufweist.

Die entsprechende zur Durchführung von Schritt (2-i) eingesetzte Vorrichtung umfasst ein Mittel zum zumindest teilweisen Prägen des zumindest teilweise auf die Oberfläche des Substrats (F1) applizierten Beschichtungsmittels (B1a) mittels wenigstens eines Prägewerkzeugs (P1) auf. Ferner weist die eingesetzte Vorrichtung vorzugsweise ein Mittel zum Pressen von (P1) auf das vorzugsweise als Endlos-Folienbahn eingesetzte Substrat (F1) nach dem Applizieren des vorzugsweise strahlenhärtbaren Beschichtungsmittels (B1a) auf (F1) auf, welches vorzugsweise in Förderrichtung des Substrats (F1) gesehen hinter dem Mittel zum Applizieren des strahlenhärtbaren Beschichtungsmittels (B1a) gelegen ist.

Die zumindest teilweise Prägung gemäß Schritt (2-i) des erfindungsgemäßen Verfahrens wird mittels eines Prägewerkzeugs (P1) durchgeführt. Bei (P1) kann es sich vorzugsweise um einen Prägekalander handeln, welcher vorzugsweise ein Rasterauftragswerk, besonders bevorzugt ein Rasterwalzwerk umfasst. Dieser Kalander verfügt vorzugsweise in Höhenrichtung übereinander in einem bestimmten Abstand angeordnete, gegensinnig, d.h. gegenläufig, oder mitläufig drehende Walzen, wobei der mit einer Prägestruktur zu versehene Verbund (F1B1a) den Walzen zugeführt und durch den sich ausbildenden Walzenspalt hindurchgeführt wird, wobei die Spaltweite variabel einstellbar ist. Das Rasterwalzwerk umfasst dabei vorzugsweise eine erste Walze wie eine metallische Walze, beispielsweise eine Stahlwalze oder eine Nickelwalze, oder aber eine Quarz-basierte Walze oder eine mit wenigstens einem Kunststoff beschichtete Walze. Die erste Walze fungiert als Prägewalze (Druckwalze). Das Rasterwalzwerk umfasst dabei vorzugsweise eine zweite Walze (Andruckwalze oder Anpresswalze). Die erste Walze, fungiert dabei als Prägewerkzeug (P1) und enthält die Negativform der in die Oberfläche des Verbunds (F1B1a) einzuprägenden Prägestruktur. Dazu ist das Prägewerkzeug (P1) vorzugsweise mit einem Verbund (F2B2) als Prägematrize (p1) versehen, die diese Negativform darstellt. Die Erstellung der Negativform der einzuprägenden Struktur auf dem Prägewerkzeug (P1) erfolgt nach den dem Fachmann bekannten und üblichen Verfahren, wobei je nach Struktur und Materialien spezifische Verfahren besonders vorteilhaft sein können. Vorzugsweise wird dies erfindungsgemäß dadurch realisiert, dass die Prägewalze als Prägewerkzeug (P1) fungiert und den als Prägematrize (p1) vorzugsweise eingesetzten Verbund (F2B2) in Form einer beschichteten und zumindest teilweise geprägten Folie, vorzugsweise Folienbahn, besonders bevorzugt sich vorzugsweise bewegenden Endlos-Folienbahn umfasst. Mittels der Andruckwalze wird gegenläufig der zu prägende Verbund (F1B1a) bewegt. An dem Punkt des Walzenspaltes, der durch die in einem bestimmten Abstand zueinander angeordneten, gegensinnig drehenden Walzen gebildet wird, erfolgt die Prägung gemäß Schritt (2-i). Die erste Walze, die die Prägematrize (p1) führt, dient dabei der Prägung des Verbunds (F1B1a), der von der dieser Prägewalze gegenüberliegenden zweiten Walze geführt wird, welche den mit einer Prägestruktur zu versehenden Verbund (F1B1a) gegen die erste Prägewalze drückt. Wie bereits vorstehend ausgeführt können die Strukturen auf der Prägewalze - also die der Prägematrize (p1) - entweder eine durchgehende Struktur haben oder aber als unterbrochene Struktur (Abfolge von Einzelprägestrukturen) ausgebildet sein, wobei auch eine Kombination beider Strukturen möglich ist. Die jeweiligen Strukturen auf der Prägewalze können die unterschiedlichsten geometrischen Formen aufweisen, je nach beabsichtigter Struktur des Verbundes. Falls erforderlich kann Schritt (2-i) bei erhöhter Temperatur, z.B. bei 30 bis 100°C oder zumindest bis 80°C, durchgeführt werden. In diesem Fall durchläuft der zu prägende Verbund (F1B1a) zunächst ein Heizwalzwerk, danach erfolgt gegebenenfalls eine Bestrahlung mit Infrarot-Licht, bevor der vorstehend beschriebene eigentliche Prägevorgang erfolgt. Nach der Prägung durchläuft der dann geprägte Verbund (F1B1a) gegebenenfalls zur Abkühlung ein Kühlwalzwerk. Alternativ kann Schritt (2-i) auch unter Kühlen erfolgen: In diesem Fall durchläuft der zu prägende Verbund (F1B1a) zunächst ein Kühlwalzwerk, bevor der vorstehend beschriebene eigentliche Prägevorgang erfolgt.

Vorzugsweise ist der in Schritt (2-i) als Prägematrize (p1) eingesetzte Verbund (F2B2) ein Verbund aus einer Folienbahn (F2) und einer darauf aufgebrachten und zumindest teilweise geprägten und zumindest teilweise ausgehärteten Beschichtung (B2).

Vorzugsweise wird der in Schritt (2-i) als Prägematrize (p1) eingesetzte Verbund (F2B2) während der Durchführung von Schritt (2-i) über eine als Prägewerkzeug (P1) fungierende erste Walze geführt und der Verbund (F1B1a) wird über eine zweite Walze geführt wird, die der ersten Walze gegenüberliegt und dieser gegenläufig oder zu dieser mitläufig ist, vorzugsweise gegenläufig ist.

Vorzugsweise erfolgt die zumindest teilweise Prägung gemäß Schritt (2-i) auf Höhe des Walzenspalts, der durch die beiden einander gegenüberliegenden, gegensinnig oder in die gleiche Richtung drehenden Walzen gebildet wird, wobei die zumindest teilweise geprägte Beschichtung (B2) des Verbunds (B2F2) dem Beschichtungsmittel (B1a) des Verbunds (F1B1a) zugewandt ist. Die zumindest teilweise Prägung wird dabei vorzugsweise durch Andrücken oder Anpressen des Verbunds (F2B2) auf den Verbund (F1B1a) erzielt.

Der in Schritt (2-i) als Prägematrize (p1) vorzugsweise eingesetzte Verbund (F2B2) aus Substrat (F2) und zumindest teilweise geprägter und zumindest teilweise ausgehärteter Beschichtung (B2) wird nachfolgend auch als "Mastersubstrat" oder "Masterfilm" bezeichnet. Handelt es sich bei dem Substrat (F2) um eine Folie, wird der entsprechende Masterfilm als "Masterfolie" bezeichnet. Handelt es sich bei dem Substrat (F2) um eine Folienbahn, wird der entsprechende Masterfilm als "Masterfolienbahn" bezeichnet. Die Beschichtung (B2) des Masterfilms wird nachfolgend auch als "zumindest teilweise ausgehärteter Masterlack" oder "Masterlackschicht" und das zur Herstellung des ausgehärteten Masterlacks eingesetzte Beschichtungsmittel (B2a) als "Masterlack" bezeichnet. Vorzugsweise befindet sich zwischen (F2) und (B2) des Verbunds (F1B1) keine weitere (Lack)schicht. Es ist aber möglich, dass zwischen (F2) und (B3) des Verbunds (F2B2) wenigstens eine Haftvermittlerschicht vorhanden ist, die in diesem Fall vorzugsweise durchlässig für UV-Strahlung ist.

*Optionaler Schritt (3)*

Schritt (3) des erfindungsgemäßen Verfahrens sieht ein zumindest teilweises Aushärten des Beschichtungsmittels (B1a) innerhalb des nach Schritt (2-i) oder Schritt (2-ii) erhaltenen Verbunds (F1B1a) vor, wobei das Beschichtungsmittel (B1a) während der gesamten Dauer der zumindest teilweisen Aushärtung in Kontakt mit der Prägematrize (p1) ist. Nach Durchführung von Schritt (3) wird ein Verbund (B1F1) aus Substrat (F1) und zumindest teilweise geprägter und zumindest teilweise ausgehärteter Beschichtung (B1) erhalten.

Vorzugsweise weisen werden die Schritte (2-i) und (3) zeitgleich durchgeführt. Dabei erfolgt die zumindest teilweise Aushärtung gemäß Schritt (3) während der Durchführung von Schritt (2-i) vorzugsweise *in situ.*

Die entsprechende zur Durchführung von Schritt (3) eingesetzte Vorrichtung umfasst daher vorzugsweise wenigstens eine Strahlungsquelle zum Bestrahlen des Beschichtungsmittels (B1a) mit einer Härtungsstrahlung. Da das Beschichtungsmittel (B1a) vorzugsweise ein UV-strahlenhärtbares Beschichtungsmittel ist, wird als Härtungsstrahlung vorzugsweise UV-Strahlung eingesetzt. Wenn das Beschichtungsmittel (B1a) nicht strahlenhärtbar ist, ist es vorzugsweise chemisch härtbar. In diesem Fall erfolgt die Aushärtung gemäß Schritt (3) thermisch, beispielsweise durch Einsatz geeigneter Wärmestrahler. Auch eine kombinierte Aushärtung, d.h. eine thermische Aushärtung und eine Aushärtung mittels UV-Strahlung ist selbstverständlich möglich.

Als Strahlungsquellen für die Strahlungshärtung geeignet sind z.B. Quecksilber-Niederdruckstrahler, -Mitteldruckstrahler, Hochdruckstrahler sowie Leuchtstoffröhren, Impulsstrahler, Metallhalogenidstrahler (Halogenlampen), Laser, LED und zudem Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht oder durch Bestrahlung mit energiereichen Elektronen. Die üblicherweise zur Vernetzung ausreichende Strahlungsdosis bei UV-Härtung liegt im Bereich von 80 bis 3.000 mJ/cm$^2$. Selbstverständlich sind auch mehrere Strahlungsquellen für die Härtung einsetzbar, z.B. zwei bis vier. Diese können auch in jeweils unterschiedlichen Wellenlängenbereichen strahlen.

Vorzugsweise erfolgt die zumindest teilweise Härtung in Schritt (3) durch Bestrahlung durch das Substrat (F1) hindurch. Dabei ist es vorteilhaft, dass die Durchlässigkeit des Substrats (F1) für die eingesetzte Strahlung abgestimmt ist auf wenigstens einen eingesetzten Photoinitiator, der vorzugsweise in dem Beschichtungsmittel (B1a) vorhanden ist. So ist beispielsweise das Material **PET** als Substrat (F1), also z.B. eine PET-Folie, durchlässig für Strahlung mit einer Wellenlänge unterhalb 400 nm. Als Photoinitiatoren, die bei dieser Strahlung Radikale erzeugen, kommen beispielsweise 2,4,6-Trimethylbenzoyldiphenylphosphinoxid, Ethyl-2,4,6-trimethyl-benzoylphenylphosphinat und Bis-(2,4,6-trimethylbenzoyl)-phenylphosphinoxid in Betracht. Vorzugsweise ist daher in diesem Fall wenigstens ein solcher Photoinitiator in dem Beschichtungsmittel (B1a) vorhanden.

*Optionaler Schritt (4)*

Schritt (4) des erfindungsgemäßen Verfahrens sieht ein optionales Entfernen des Verbunds (F1B1) von der Prägematrize (p1) vor. Dadurch kann ein Verbund (F1B1) aus Substrat (F1) und zumindest teilweise geprägter und zumindest teilweise ausgehärteter Beschichtung (B1) erhalten werden. Vorzugsweise wird Schritt (4) durchgeführt.

*Alternative (ii) umfassend Schritte (1-ii) und (2-ii)*

Das erfindungsgemäße Verfahren gemäß Alternative (ii) umfasst wenigstens die Schritte (1-ii), (2-ii) und optional (3) sowie optional (4). Die Schritte (3) und (4) wurden vorstehend bereits im Zusammenhang mit Alternative (i) beschrieben und können analog auch innerhalb der Alternative (ii) durchgeführt werden.

Alle im Zusammenhang mit der Alternative (i) beschriebenen bevorzugten Ausführungsformen sind analog auf Alternative (ii) anzuwenden.

*Schritt (1-ii)*

Schritt (1-ii) des erfindungsgemäßen Verfahrens sieht ein Applizieren eines Beschichtungsmittels (B1a) auf wenigstens einen Teil einer zumindest teilweise geprägten Oberfläche einer Prägematrize (p1) eines Prägewerkzeugs (P1) vor. Wie vorstehend erwähnt kann als Prägematrize dabei ein Verbund (B2F2) aus einem Substrat (F2) und einer zumindest teilweise geprägten und zumindest teilweise ausgehärteten Beschichtung (B2) eingesetzt werden.

*Schritt (2-ii)*

Schritt (2-ii) des erfindungsgemäßen Verfahrens sieht ein Applizieren eines Substrats (F1) auf wenigstens einen Teil der Oberfläche des auf die Prägematrize (p1) applizierten Beschichtungsmittels (B1a) unter Erhalt eines auf (p1) befindlichen Verbunds (B1aF1) vor.

Wird in Schritt (1-ii) als Prägematrize (p1) ein Verbund (B2F2) eingesetzt so wird dieser nach der Applikation des Beschichtungsmittels (B1a) vorzugsweise auf wenigstens einen Teil seiner zumindest teilweise geprägten Oberfläche unter Erhalt des Verbunds (B1aB2F2) während der Durchführung von Schritt (2-ii) über eine als Prägewerkzeug (P1) fungierende erste Walze geführt und das innerhalb von Schritt (2-ii) eingesetzte Substrat (F1) über eine zweite Walze geführt wird, die der ersten Walze gegenüberliegt und dieser gegenläufig oder zu dieser mitläufig, vorzugsweise gegenläufig, ist. Vorzugsweise erfolgt die zumindest teilweise Prägung gemäß Schritt (2-ii) auf Höhe des Walzenspalts, der durch die beiden einander gegenüberliegenden, gegensinnig oder in die gleiche Richtung drehenden Walzen gebildet wird, wobei das Beschichtungsmittel (B1a) des Verbunds (B1aB2F2) dem Substrat (F1) zugewandt ist. Die zumindest teilweise Prägung wird dabei vorzugsweise durch Andrücken oder Anpressen des Substrats (F1) auf den Verbund (B1aB2F2) erzielt.

In Fig. 1 ist schematisch eine seitliche Ansicht einer Vorrichtung dargestellt, die zur Durchführung der Schritte (1-i) und (2-i) sowie optional (3) und optional (4) des erfindungsgemäßen Verfahrens eingesetzt werden kann und an der das erfindungsgemäße Verfahren beispielhaft illustriert ist. Gleichermaßen kann diese Vorrichtung in grundsätzlich analoger Weise auch zur Durchführung der Schritte (1-ii) und (2-ii) sowie (3) und optional (4) des erfindungsgemäßen Verfahrens eingesetzt werden. Mittels dieser Vorrichtung können Strukturen wie Mikro- und/oder Nanostrukturen vorzugsweise von einer als Masterfilm vorliegenden Prägematrize (F2B2, p1) auf ein mit (B1a) beschichtetes Substrat (F1) übertragen werden. Diese Vorrichtung wird daher auch allgemein als Transfervorrichtung bezeichnet und ist in Fig. 1 mit dem Bezugszeichen (10) versehen.

In der Transfervorrichtung (10) ist als Herzstück ein Prägebereich (1) ausgebildet, in welchem eine Druckwalze (2) mit einem Walzenmantel aus einem Quarzglas angeordnet ist. Die Druckwalze (2) wird zur Rotation angetrieben. Neben der Druckwalze (2) ist eine Strahlungsquelle als Beleuchtungseinheit (3) angeordnet, die UV-Licht erzeugt und insbesondere eine in Längsrichtung der Druckwalze (2) angeordnete Reihe aus UV-LEDs umfassen kann. Wie in Fig. 1 dargestellt, kann die Beleuchtungseinheit (3) auch im Inneren der Druckwalze (2) angeordnet sein. Gegen die Druckwalze (2) gedrückt ist eine Andruckwalze (4) im Prägebereich (1) angeordnet. In einem Matrizengestell (5) der Transfervorrichtung (10) sind zwei Folienbahnrollen (6) und (7) angeordnet, die motorisch zur Rotation angetrieben werden können. Selbstverständlich können die Folienbahnrollen (6) und (7) auch in anderer Weise gelagert und angeordnet sein als in einem Matrizengestell (5), z.B. in einem schrankartigen Element oder auch außerhalb der eigentlichen Transfervorrichtung (10). Auf den hier in als in dem Matrizengestell angeordnet gezeigten Folienbahnrollen (6) und (7) ist eine Masterfolienbahn (8) aufgerollt, die eine Endlos-Prägematrize darstellt. Die Masterfolienbahn (8) ist auf einer Übertragungsoberfläche mit einer Masterlackschicht versehen, in der Negativformen von zu übertragenden Mikro- und/oder Nanostrukturen als Oberflächenrelief eingebracht sind. Die Masterlackschicht ist zumindest teilweise gehärtet, so dass die reliefartigen Strukturierungen darin beständig sind. Die Masterfolienbahn (8) stellt einen Verbund (F2B2) dar. Die Masterfolienbahn (8) läuft von der ersten Folienbahnrolle (6) ab, wird über verschiedene Umlenkrollensysteme dem Prägebereich (1) zugeführt und läuft, wie in Fig. 1 zu erkennen ist, lotrecht von oben her in den Bereich zwischen der Druckwalze (2) und der Andruckwalze (4) ein. Dort wird sie über einen Abschnitt des Umfanges der Druckwalze (2) straff anliegend geführt, verlässt dann wiederum die Druckwalze (2) und wird, erneut über Umlenkrollensysteme mit Bahnspannern der zweiten Folienrollenbahn (7) zugeführt und auf dieser aufgewickelt. Eine das mit Strukturen wie Mikro- und/oder Nanostrukturen zu versehene Substrat (F1) bildende Folienbahn (9) wird ausgehend von einer Folienbahnrolle (11), auch hier über verschiedene Umlenkrollensysteme mit Bahnstraffer dem Prägebereich (1) zugeführt, läuft dort straff über einen Umfangsabschnitt der Andruckwalze (4) und von dort in den Bereich der Anlage der Andruckwalze (4) an der Druckwalze (2) bzw. in den Bereich des zwischen diesen Elementen gebildeten Walzenspaltes ein. Die Folienbahn (9) verlässt diesen Bereich in der Darstellung nach Fig. 1 lotrecht nach unten und wird - erneut geführt über Umlenkrollensysteme und Bahnstraffer - zu einer Folienbahnrolle (12) geführt, auf der diese als fertig behandeltes Produkt aufgewickelt wird. Auf ihrem Weg in den Prägebereich (1) bzw. hin zu dem Walzenspalt zwischen der Druckwalze (2) und der Andruckwalze (4) wird mit einer hier außerhalb des Druckbereichs (1) angeordneten Lackauftragseinheit (27) die Folienbahn (9) auf ihrer im Druckbereich (1) der Druckwalze (2) zugewandten Oberfläche mit einer Lackschicht versehen. Durch die Lackauftragseinheit (27) wird somit gemäß Schritt (1-i) des erfindungsgemäßen Verfahrens ein Beschichtungsmittel (B1a) auf die als (F1) eingesetzte Folienbahn (9) appliziert. Im Druckbereich (1) wird dann die Folienbahn (9) mit ihrer mit der noch nicht gehärteten Lackschicht versehenen Oberfläche mit der mit der Masterlackschicht versehenen Oberfläche der Masterfolienbahn (8) zur Durchführung von Schritt (2-i) des erfindungsgemäßen Verfahrens zusammengebracht. Vor Übertragen der Strukturen wird die Masterlackschicht mit wenigstens einem organischen Lösemittel und/oder wenigstens einem Reaktivverdünner mittels einer Ultraschalldüse benetzt. Dabei läuft die Folienbahn (9) über die Andruckwalze (4), die Masterfolienbahn (8) über die Druckwalze (2). Beide Bahnen, die Folienbahn (9) und die Masterfolienbahn (8) sind mit ihren mit der jeweiligen Lackschicht (bei der Masterfolienbahn (8) die zumindest teilweise gehärtete Masterlackschicht, die der Beschichtung (B2) entspricht, bei der Folienbahn (9) die ungehärtete Lackschicht, die dem Beschichtungsmittel (B1a) entspricht) einander zugewandt. In dem Bereich, in dem die Andruckwalze (4) gegen die Druckwalze (2) gedrückt ist, wird das Negativabbild der zu übertragenden Strukturen wie Mikro- und/oder Nanostrukturen, das in der Masterlackschicht (B2) ausgebildet ist, in die ungehärtete Lackschicht, die dem Beschichtungsmittel (B1a) entspricht, eingedrückt, wodurch die Strukturen übertragen werden. Zugleich erfolgt durch die Beleuchtungseinheit (2) eine UV-Beleuchtung und somit ein zumindest teilweises Aushärten der ungehärteten Lackschicht, die dem Beschichtungsmittel (B1a) der Lackschicht auf der Folienbahn (9) entspricht, solange diese Lackschicht noch mit der Masterlackschicht (8) in Kontakt ist. So wird unmittelbar beim Übertragen der Strukturen und in situ die zumindest teilweise Härtung der Lackschicht durchgeführt. Die Bestrahlung der Folienbahn (9), bzw. der auf dieser aufgebrachten ungehärteten Lackschicht erfolgt dabei durch das Folienmaterial (9) hindurch bei Bestrahlung von außen auf den Druckzylinder (2). Alternativ erfolgt die Bestrahlung durch das Quarzglasmaterial der Mantelfläche des Druckzylinders (2) und auch durch das Material der Masterfolienbahn (8) und der darauf aufgebrachten Masterlackschicht hindurch. Entsprechend sind Masterfolienbahn (8) und Masterlackschicht für die verwendete Strahlung, hier UV-Licht, durchlässig gestaltet. Die Mantelfläche der Druckwalze (2) ist hier als aus Quarzglas bestehend beschrieben. Grundsätzlich kommt hier aber auch ein anderes Material in Frage, solange dieses für die aus dem Inneren der Druckwalze (2) abgegebene Härtungsstrahlung (die eine andere sein kann als UV-Licht) durchlässig ist. Alternativ kann anstelle der Beleuchtungseinheit (3), die UV-Beleuchtung liefert, beispielsweise auch ein thermischer Wärmestrahler eingesetzt werden, wenn es sich bei dem Beschichtungsmittel (B1a) um ein nicht strahlenhärtendes Beschichtungsmittel handelt. Es ist im Anschluss an die zumindest teilweise Härtung durch UV- Beleuchtung eine optionale Nachbelichtung möglich, z.B. mittels IR-Strahlung. Am Ende dieses Härtungsprozesses gemäß optionalem Schritt (4) des erfindungsgemäßen Verfahrens trennen sich die Folienbahn (9) und die Masterfolienbahn (8) unter Trennung der jeweils nun strukturierten Schichtverbünde (F1B1) und Masterfilm (F2B2). Die so mit der gewünschten Strukturierung versehene beschichtete Folienbahn (9) (d.h. der Verbund (F1B1)) wird als fertiges Produkt der Folienbahnrolle (12) zugeführt und auf dieser aufgewickelt. Wird von außen auf die Druckwalze (2) mittels einer Beleuchtungseinheit (3) beleuchtet, so kann die mit der gewünschten Strukturierung versehene beschichtete Folienbahn (9) (d.h. der Verbund (F1B1)) auch opak sein, wenn die Anordnung so gewählt wird, dass die Masterfolienbahn (8) (also der Verbund (F2B2)) und die Folienbahn (9) (also der Verbund (F1B1)) vertauscht werden. Die Lackierung an der Lackauftragseinheit (27) gemäß Schritt (1-i) des erfindungsgemäßen Verfahrens kann dann ohne Einschränkung des Prozesses auf die Masterfolienbahn (8) erfolgen.

In Fig. 2 ist schematisch eine seitliche Ansicht einer Vorrichtung dargestellt, die zur Durchführung der Schritte (1-i) und (2-i) sowie optional (3) und optional (4) des erfindungsgemäßen Verfahrens eingesetzt werden kann und an der das erfindungsgemäße Verfahren beispielhaft illustriert ist. Mittels dieser Vorrichtung können insbesondere Strukturen wie Mikro- und/oder Nanostrukturen mittels eines herkömmlichen Prägewerkzeugs (P1) auf ein mit (B1a) beschichtetes Substrat (F1) übertragen werden und nach zumindest teilweisem Aushärten ein Verbund (F1B1) erhalten werden.

Die in **Fig. 2** gezeigte Vorrichtung (30) arbeitet nach einem Übertragungsprinzip, bei dem unmittelbar von einem strukturiertem Druckzylinder bzw. einer Druckwalze, die hier ein Masterdruckzylinder (17) ist, die gewünschten Negativ-Strukturen in die auf die Masterfolienbahn (8b) aufgebrachte, noch nicht ausgehärtete Lackschicht eingeprägt - entsprechend einem Verbund (F1B1a) - und diese dann mit den darauf aufgebrachten Strukturen *in situ* mittels einer Beleuchtungseinheit (3) unter Erhalt der Masterfolienbahn (8) - entsprechend einem Verbund (F1B1) - zumindest teilweise gehärtet wird. Die als Substrat (F1) eingesetzte Folienbahn (8a) wird in diesem Verfahren von einer Folienbahnrolle (18), die nur das Trägermaterial, also die reine Folie ohne aufgebrachten Masterlack enthält, abgezogen, über diverse Umlenkrollensysteme und Bahnspannsysteme geführt und in einen Prägebereich (1) der Vorrichtung eingebracht. Dort läuft die Folienbahn (8a) in einen Bereich zwischen einer Andruckwalze (4) und dem Masterdruckzylinder (17) und wird außerhalb des Druckbereichs in der Lackauftragseinrichtung (27) mit der noch nicht ausgehärteten Masterlackschicht (entsprechend dem Beschichtungsmittel B1a) versehen. In dem Prägebereich (1), in dem die Masterfolienbahn (8b) mit der noch nicht ausgehärteten Masterlackschicht entlang eines Abschnittes der Mantelfläche des Masterdruck-zylinders (17) läuft, werden die in dem Masterdruckzylinder (17) in dessen Mantelfläche eingeprägten Mikro- und/oder Nanostrukturen als Negativabbild in die Masterlackschicht der Masterfolienbahn (8b) eingebracht und übertragen. Vor Übertragen der Strukturen werden die in die Mantelfläche des Druckzylinders (17) eingeprägten Mikro- und/oder Nanostrukturen mit wenigstens einem organischen Lösemittel und/oder wenigstens einem Reaktivverdünner mittels einer Ultraschalldüse benetzt. Die das ungehärtete Beschichtungsmittel (B1a) aufweisende Masterfolienbahn (8b) wird dann gemäß optionalem Schritt (3) des erfindungsgemäßen Verfahrens zumindest teilweise ausgehärtet. Dabei wird *in situ* durch Bestrahlen mit einer Beleuchtungseinheit (3) mittels UV-Strahlung ausgehärtet, z.B. mittels einer Einheit gebildet aus UV-LEDs. Anschließend wird die so erhaltene Masterfolie (8), also der Verbund (F1B1), von der Mantelfläche des Masterdruckzylinders (17) abgezogen und die so fertig gestellte Masterfolienbahn (8) wird auf eine Folienbahnrolle (19) aufgespult. Die Folienbahnrolle (19) enthält dann die fertige Masterfolienbahn (8) mit der darauf aufgebrachten Masterlackschicht und den darin eingeprägten Negativabbildern der Mikro- und/oder der oder Nanostrukturen. Diese Folienbahnrolle (19) kann entnommen und dann in einer Transfervorrichtung (10) gemäß **Fig. 1** oder in einer anderen, mit gleichem Prinzip arbeitenden Transfervorrichtung als erste Folienbahnrolle (6) eingesetzt werden.

*Beschichtungsmittel (B1a)*

Jede Art von Beschichtungsmittel kann als Beschichtungsmittel (B1a) innerhalb des erfindungsgemäßen Verfahrens eingesetzt werden. Bei dem Beschichtungsmittel (B1a) kann es sich um ein physikalisch trocknendes, thermisch härtbares, chemisch härtbares und/oder strahlenhärtbares Beschichtungsmittel (B1a) handeln. Vorzugsweise ist das Beschichtungsmittel (B1a) ein chemisch härtbares, ein thermisch härtbares und/oder strahlenhärtbares Beschichtungsmittel, besonders bevorzugt ein strahlenhärtbares Beschichtungsmittel. Demzufolge erfolgt die zumindest teilweise Aushärtung gemäß optionalem Schritt (3) vorzugsweise mittels Strahlenhärtung.

Unter einer physikalischen Trocknung wird dabei vorzugsweise das einfache Abdunsten von Lösungsmittel(n) unter Ausbildung der Beschichtung (B1) verstanden. Eine thermische Härtung sieht dabei vorzugsweise einen Härtungsmechanismus vor, der auf eine Temperatur oberhalb von Raumtemperatur (>23°C) zurückzuführen ist. Dies kann beispielsweise die Bildung von Radikalen oder Ionen, bevorzugt Radikalen aus einem Initiator sein, der bei den erhöhten Temperaturen zerfällt und so eine radikalische bzw. ionische Polymerisation startet. Beispiele für solche thermisch aktivierbare Initiatoren sind solche, die eine Halbwertszeit bei 80°C von weniger als 100 Stunden aufweisen. Unter einer chemischen Härtung wird vorzugsweise die Reaktion wenigstens zweier unterschiedlicher und zueinander komplementärer reaktiver funktioneller Gruppen verstanden, beispielsweise im Sinne einer Polykondensation wie einer Reaktion einer -OH-Gruppe mit einer -COOH-Gruppe, oder im Sinne einer Polyaddition (Reaktion einer NCO-Gruppe mit einer -OH- oder Amino-Gruppe).

Ist das Beschichtungsmittel (B1a) ein physikalisch trocknendes, thermisch härtbares und/oder chemisch härtbares Beschichtungsmittels, so wird zu seiner Herstellung wenigstens ein übliches und dem Fachmann bekanntes Polymer als Bindemittel eingesetzt. Dieses weist dann vorzugsweise vernetzbare funktionelle Gruppen auf. Jede übliche dem Fachmann bekannte vernetzbare funktionelle Gruppe kommt dabei in Betracht. Insbesondere sind die vernetzbaren funktionellen Gruppen ausgewählt aus der Gruppe bestehend aus Hydroxyl-Gruppen, Amino-Gruppen, Carbonsäure-Gruppen, Isocyanaten, Polyisocyanaten und Epoxiden. Die Polymere sind vorzugsweise exotherm oder endotherm vernetzbar bzw. härtbar, vorzugsweise in einem Temperaturbereich von -20°C bis zu 250°C, oder von 18°C bis 200°C, vernetzbar bzw. härtbar. Als Polymere eignet sich insbesondere wenigstens ein Polymer ausgewählt aus der Gruppe bestehend aus Polyurethanen, Polyethern, Polyestern, Polyamiden, Polyharnstoffen, Polyvinylchloriden, Polystyrolen, Polycarbonaten, Poly(meth)acrylaten, Epoxidharzen, Phenol-Formaldehydharzen, Melamin-Formaldehydharzen. Die Polymere können dabei insbesondere OHfunktionell sein. In diesem Fall können sie unter den allgemeinen Begriff "Polyole" subsumiert werden. Bei solchen Polyolen kann es sich beispielsweise um Polyacrylatpolyole, Polyester-polyole, Polyetherpolyole, Polyurethanpolyole, Polyharnstoffpolyole, Polyesterpolyacrylatpolyole, Polyesterpolyurethanpolyole, Polyurethanpolyacrylatpolyole, polyurethanmodifizierte Alkydharze, Fettsäuremodifizierte Polyesterpolyurethanpolyole sowie Mischungen der genannten Polyole handeln. Bevorzugt sind Polyacrylatpolyole, Polyesterpolyole und Polyetherpolyole.

Es kann dabei wenigstens ein Polymer eingesetzt werden, welches unter Beteiligung von Isocyanat und/oder oligomerisierten Isocyanat-Gruppen ausgehärtet wird, ganz besonders bevorzugt wenigstens ein entsprechendes Polyurethan und/oder wenigstens ein entsprechender Polyharnstoff (z.B. sogenannte "Polyaspartic-Bindemittel"). Bei Polyaspartic-Bindemitteln handelt es sich um Komponenten, die aus Reaktion von aminofunktionellen Verbindungen, insbesondere sekundären Aminen, mit Isocyanaten umgesetzt werden. Wird wenigstens ein Polyurethan eingesetzt, so eignen sich insbesondere Polyurethan-basierte Harze, die durch eine Polyadditionsreaktion zwischen hydroxylgruppenhaltigen Komponenten wie Polyolen und wenigstens einem Polyisocyanat (aromatische und aliphatische Isocyanate, Di-, Tri- und/oder Polyisocyanate) herstellbar sind. Dabei ist üblicherweise ein stöchiometrischer Umsatz der OH-Gruppen der Polyole mit den NCO-Gruppen der Polyisocyanate erforderlich. Jedoch kann das einzusetzende stöchiometrische Verhältnis auch variiert werden, da das Polyisocyanat in solchen Mengen zu der Polyol-Komponente gegeben werden kann, dass es zu einer "Übervernetzung" oder zu einer "Untervernetzung" kommen kann. Werden Epoxidharze, d.h. Epoxidbasierte Harze eingesetzt, so eignen sich vorzugsweise solche Epoxid-basierten Harze, die aus Glycidylethern hergestellt werden, welche endständige Epoxidgruppen und innerhalb des Moleküls Hydroxylgruppen als funktionelle Gruppen aufweisen. Vorzugsweise sind diese Umsetzungsprodukte von Bisphenol A und Epichlorhydrin bzw. Bisphenol F mit Epichlorhydrin und Mischungen davon, welche auch in Gegenwart von Reaktivverdünnern) eingesetzt werden. Die Härtung bzw. Vernetzung derartiger Epoxid-basierter Harze erfolgt üblicherweise durch eine Polymerisation der Epoxidgruppen des Epoxidringes, durch eine Polyadditionsreaktion in Form einer Anlagerung anderer reaktiver Verbindungen als Härter in stöchiometrischen Mengen an die Epoxidgruppen, wobei dementsprechend pro Epoxidgruppe die Gegenwart eines aktiven Wasserstoffäquivalents erforderlich ist (d.h. pro Epoxid-Äquivalent zur Aushärtung ein H-aktives-Äquivalent benötigt wird), oder durch eine Polykondensation über die Epoxid- und die Hydroxylgruppen. Geeignete Härter sind beispielsweise Polyamine, insbesondere (hetero)aliphatische, (hetero) aromatische und (hetero) cycloaliphatische Polyamine, Polyamidoamine, Polyaminoamide sowie Polycarbonsäuren und ihre Anhydride.

Das Beschichtungsmittel (B1a) kann durch Einsatz einer Strahlenquelle gehärtet werden, vorzugsweise durch Einsatz von UV-Strahlung. Somit ist (B1a) vorzugsweise ein UV-Strahlen-härtendes Beschichtungsmittel.

Vorzugsweise weist (B1a) daher ungesättigte Kohlenstoff-Doppelbindungen auf, besonders bevorzugt (Meth)acryl-Gruppen. Vorzugsweise enthält dieses Beschichtungsmittel (B1a) wenigstens ein Urethan(meth)acrylat. Bei Härtung mit Hilfe von (N)IR- und/oder UV-Licht enthält das Beschichtungsmittel (B1a) vorzugsweise wenigstens einen Photoinitiator, der durch Licht der eingestrahlten Wellenlänge zu Radikalen zersetzt werden kann, die ihrerseits eine radikalische Polymerisation starten können. Bei Härtung mit Elektronenstrahlung ist die Anwesenheit solcher Photoinitiatoren dagegen nicht erforderlich.

Das Beschichtungsmittel (B1a) ist vorzugsweise ein strahlenhärtbares Beschichtungsmittel. Die Begriffe "strahlenhärtbar" und "strahlenhärtend" sind dabei austauschbar. Unter dem Begriff "Strahlenhärtung" wird vorzugsweise eine radikalische Polymerisation von polymerisierbaren Verbindungen infolge einer elektromagnetischen und/oder korpuskularen Strahlung, beispielsweise (N)IR-Licht im Wellenlänge-bereich von λ=>400-1.200 nm, bevorzugt 700-900 nm und/oder UV-Licht im Wellenlängenbereich von λ=100 bis 400 nm, bevorzugt von λ=200 bis 400 nm und besonders bevorzugt λ=250 bis 400 nm und/oder Elektronenstrahlung im Bereich von 150 bis 300 keV und besonders bevorzugt mit einer Strahlungsdosis von mindestens 80, bevorzugt 80 bis 3.000 mJ/cm$^2$ verstanden. Besonders bevorzugt wird mittels UV-Strahlung als Strahlenhärtung gehärtet. Das Beschichtungsmittel (B1a) kann durch Einsatz einer geeigneten Strahlenquelle gehärtet werden. Somit ist (B1a) vorzugsweise ein UV-Strahlenhärtendes Beschichtungsmittel.

Zur Härtung mit Hilfe von (N)IR- und/oder UV-Licht enthält das Beschichtungsmittel (B1a) wenigstens einen Photoinitiator als Komponente (a). Dieser kann durch Licht der eingestrahlten Wellenlänge zu Radikalen zersetzt werden, die ihrerseits eine radikalische Polymerisation starten können. Bei Härtung mit Elektronenstrahlung ist die Anwesenheit solcher Photoinitiatoren dagegen nicht erforderlich. Vorzugsweise enthält das Beschichtungsmittel (B1a) wenigstens einen Photoinitiator als Komponente (a), der durch Licht der eingestrahlten Wellenlänge zu Radikalen zersetzt werden kann, die ihrerseits eine radikalische Polymerisation starten können.

Photoinitiatoren wie UV-Photoinitiatoren sind dem Fachmann bekannt. In Betracht kommen beispielsweise Phosphinoxide, Benzophenone, α-Hydroxy-alkyl-aryl-ketone, Thioxanthone, Anthrachinone, Ace-tophenone, Benzoine und Benzoinether, Ketale, Imidazole oder Phenylglyoxylsäuren und Gemische davon.

Phosphinoxide sind beispielsweise Mono- oder Bisacylphosphinoxide, beispielsweise 2,4,6-Trimethylbenzoyldiphenyl-phosphinoxid, Ethyl-2,4,6-trimethylbenzoylphenyl-phosphinat oder Bis(2,6-dimethoxybenzoyl)-2,4,4-trimethylpentylphosphinoxid. Benzophenone sind beispielsweise Benzophenon, 4-Aminobenzophenon, 4,4'-Bis(di-methylamino)benzophenon, 4-Phenylbenzophenon, 4-Chlorbenzophenon, Michlers Keton, o-Methoxybenzophenon, 2,4,6-Trimethylbenzophenon, 4-Methylbenzo-phenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon, α-Hydroxy-alkyl-aryl-ketone sind beispielsweise 1-Benzoyl-cyclohexan-1-ol (1-Hydroxycyclohexylphenylketon), 2-Hydroxy-2, 2-dimethylacetophenon, (2-Hydroxy-2-methyl-1-phenyl-propan-1-on), 1-Hydroxyaceto-phenon, 1-[4-(2-Hydroxyethoxy)-phenyl]-2-hydroxy-2-methyl-1-propan-1-on oder Polymeres, das 2-Hydroxy-2-methyl-1-(4-isopropen-2-yl-phenyl)-propan-1-on einpolymerisiert enthält. Xanthone und Thioxanthone sind beispielsweise 10-Thioxanthenon, Thioxanthen-9-on, Xanthen-9-on, 2,4-Dimethylthioxanthon, 2,4-Diethylthioxanthon, 2,4-Diisopropylthioxanthon, 2,4-Dichlorthioxanthon oder Chloroxanthenon, Anthrachinone sind beispielsweise β-Methylanthrachinon, tert-Butylanthrachinon, Anthrachinoncarbonsäureester, Benz[de]-anthracen-7-on, Benz[a]anthracen-7,12-dion, 2-Methylanthrax-chinon, 2-Ethylanthrachinon, 2-tert-Butylanthrachinon, 1-Chlor-anthrachinon oder 2-Amylanthrachinon. Acetophenone sind beispielsweise Acetophenon, Acetonaphthochinon, Valerophenon, Hexanophenon, α-Phenylbutyrophenon, p-Morpholinopropiophenon, Dibenzosuberon, 4-Morpholinobenzophenon, p-Diacetylbenzol, 4'-Methoxyaceto-phenon, α-Tetralon, 9-Acetylphenanthren, 2-Acetylphenanthren, 3-Acetylphenan-thren, 3-Acetylindol, 9-Fluorenon, 1-Indanon, 1,3,4-Triacetylbenzol, 1-Acetonaphthon, 2-Acetonaphthon, 2,2-Dimethoxy-2-phenylacetophenon, 2,2-Diethoxy-2-phenylacetophenon, 1,1-Dichloracetophenon, 1-Hydroxyacetophenon, 2,2-Diethoxyacetophenon, 2-Methyl-1-[4-(methylthio)phenyl]-2-morpholinopropan-1-on, 2,2-Dimethoxy-1,2-diphenylethan-2-on oder 2-Benzyl-2-dimethylamino-1-(4-morpho-linophenyl)-butan-1-on. Benzoine und Benzoinether sind beispielsweise 4-Morpholino-deoxybenzoin, Benzoin, Benzoinisobutylether, Benzointetrahydropyranylether, Benzoinmethylether, Benzoinethylether, Benzoinbutylether, Benzoinisopropylether oder 7-H-Benzoinmethylether. Ketale sind beispielsweise Acetophenondimethylketal, 2,2-Diethoxyacetophenon, oder Benzilketale, wie Benzildimethylketal. Weiterhin verwendbare Photoinitiatoren sind beispielsweise Benzaldehyd, Methylethylketon, 1-Naphthaldehyd, Triphenylphosphin, Tri-o-Tolylphosphin oder 2,3-Butandion. Typische Gemische umfassen beispielsweise 2-Hydroxy-2-methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenyl-phosphinoxid.

Bevorzugt unter diesen Photoinitiatoren sind 2,4,6-Trimethylbenzoyldiphenylphosphinoxid, Ethyl-2,4,6-trimethylbenzoyl-phenylphosphinat, Bis-(2,4,6-trimethylbenzoyl)-phenylphosphin-oxid, Benzophenon, 1-Benzoylcyclohexan-1-ol, 2-Hydroxy-2,2-dimethylacetophenon und 2,2-Dimethoxy-2-phenylacetophenon. Vorzugsweise wird daher wenigstens ein solcher Photoinitiator als Komponente (a) eingesetzt. Kommerziell erhältliche Photoinitiatoren sind beispielsweise die Produkte Irgacure® 184, Irgacure® 500, Irgacure® TPO, Irgacure® TPO-L und Lucirin® TPO sowie Darocure® 1173 der BASF SE.

Vorzugsweise enthält Beschichtungsmittels (B1a) wenigstens eine Komponente (b), die mindestens eine vorzugsweise endständige Kohlenstoffdoppelbindung aufweist. Vorzugsweise handelt es sich dabei um eine (Meth)acryl-Gruppe. Komponente (b) weist vorzugsweise ein oder zwei ethylenisch ungesättigte Gruppen auf wie beispielsweise ein oder zwei oder drei oder auch mehr (Meth)acryl-Gruppen. Es können auch zwei oder mehr unterschiedliche Komponenten (b) eingesetzt werden.

Beispiele für Komponente (b) sind mono-, di-, und/oder tri-funktionelle (Meth)acrylsäureester wie Ethylenglykoldi(meth)acrylat, 1,2-Propandioldi(meth)-acrylat, 1,3-Propandioldi(meth)acrylat, 1,4-Butandioldi(meth)acrylat, 1,3-Butandioldi(meth)acrylat, 1,5-Pentandioldi(meth)acrylat, 1,6-Hexandioldi(meth)-acrylat, 1,8-Octandioldi(meth)acrylat, Neopentylglykoldi(meth) acrylat, 1,1-, 1,2-, 1,3- und 1,4-Cyclohexandimethanoldi(meth)acrylat, 1,2-, 1,3- oder 1,4-Cyclohexandioldi(meth)acrylat, Tricyclodecandimethanoldi(meth)acrylat, Tri-methylolpropantri(meth)acrylat, Ditrimethylolpropanpenta- oder -hexa(meth)acrylat, Pentaerythrittri- oder -tetra(meth)acrylat, Glycerindi- oder -tri(meth)acrylat, sowie Di- und Poly(meth)acrylate von Zuckeralkoholen, wie beispielsweise von Sorbit, Mannit, Diglycerol, Threit, Erythrit, Adonit (Ribit), Arabit (Lyxit), Xylit, Dulcit (Galactit), Maltit oder Isomalt, 2-Phenoxyethyl(meth)acrylat, Ethyldiglykol(meth)acrylat, 4-tert.-Butylcyclo-hexyl(meth)acrylat, Trimethylolpropanformalmono(meth) acrylat, Isobornyl(meth)acrylat, Tetrahydro-furfury(meth)acrylat, 2-(2-Ethoxyethoxy)ethyl(meth)acrylat, sowie Lauryl-, Stearyl-, Isodecyl-, Octyl- und Decyl(meth)acrylat, Ester von $\alpha,\beta$-ethylenisch ungesättigten Carbonsäuren, bevorzugt von (Meth)acrylsäure mit Alkoholen, die 1 bis 20 C-Atome aufweisen, bevorzugt gegebenenfalls hydroxysubstituierte 1 bis 20 C-Atome aufweisende Alkanole, z.B. (Meth)acrylsäuremethylester, (Meth)acrylsäureethylester, (Meth)-acrylsäure-n-butylester, (Meth)acrylsäure-2-ethylhexylester, 2-Hydroxyethyl(meth)-acrylat, 2-Hydroxypropyl(meth)acrylat oder 4-Hydroxybutyl(meth)acrylat.

Ganz besonders bevorzugte Komponenten (b) sind 1,4-Butandioldi(meth)acrylat und 1,6-Hexandioldi(meth)acrylat sowie Tricyclodecandimethanoldi(meth)acrylat.

Als Komponente (b) kann zusätzlich oder alternativ zudem wenigstens ein Polyester-, Polyether-, Carbonat-, Epoxid-, Poly(meth)acrylat- und/oder Urethan-(Meth)acrylat, und/oder ungesättigtes Polyesterharz eingesetzt werden.

Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethan-(meth)acrylate enthalten zusätzlich noch ionische und/oder nichtionische hydrophile Gruppen, welche z.B. durch Aufbaukomponenten wie Hydroxycarbonsäuren ins Urethan eingebracht werden. Derartige Urethan(meth)acrylate enthalten als Aufbaukomponenten im Wesentlichen:

(a) mindestens ein organisches aliphatisches, aromatisches oder cycloaliphatisches Di- oder Polyisocyanat, beispielsweise mindestens eines der oben bei der Zweikomponenten Beschichtungsmassen beschriebenen Polyisocyanaten,

(b) mindestens eine Verbindung mit mindestens einer gegenüber Isocyanat reaktiven Gruppe, bevorzugt einem der oben bei den Polyacrylatpolyolen beschriebenen hydroxygruppentragenden Monomere, und mindestens einer radikalisch poly-merisierbaren ungesättigten Gruppe und

(c) gegebenenfalls mindestens eine Verbindung mit mindestens zwei gegenüber Isocyanat reaktiven Gruppen, beispielsweise einem der oben bei den Polyesterolen beschriebenen mehrwertigen Alkoholen.

Die Urethan(meth)acrylate haben vorzugsweise ein zahlenmittleres Molgewicht $M_n$ von 200 bis 20.000, insbesondere von 500 bis 10.000 besonders bevorzugt 600 bis 3.000 g/mol (bestimmt durch Gelpermeationschromatographie mit Tetrahydrofuran und Polystyrol als Standard). Die Urethan(meth)acrylate haben vorzugsweise einen Gehalt von 1 bis 5, besonders bevorzugt von 2 bis 4 Mol (Meth)acrylgruppen pro 1.000 g Urethan(meth)acrylat. Kommerziell erhältliche Urethan(meth)acrylate, die als Komponente (b) einsetzbar sind, sind beispielsweise Produkte der Laromer® oder Desmolux® Reihe wie Laromer® UA 9033, Laromer® UA 9065 oder Desmolux® XP 2738.

Epoxid(meth)acrylate sind erhältlich durch Umsetzung von Epoxiden mit (Meth)acrylsäure. Als Epoxide in Betracht kommen z.B. epoxidierte Olefine, aromatische Glycidylether oder aliphatische Glycidylether, bevorzugt solche von aromatischen oder aliphatischen Glycidylethern. Epoxidierte Olefine können beispielsweise sein Ethylenoxid, Propylenoxid, iso-Butylenoxid, 1-Butenoxid, 2-Butenoxid, Vinyloxiran, Styroloxid oder Epichlor-hydrin, bevorzugt sind Ethylenoxid, Propylenoxid, iso-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin. Aromatische Glycidylether sind z.B. Bisphenol-A-diglycidylether, Bisphenol-F-di-glycidylether, Bisphenol-B-diglycidylether, Bisphenol-S-diglycidylether, Hydrochinon-diglycidylether, Alkylierungsprodukte von Phenol/Dicyclopentadien, z.B. 2,5-bis[(2,3-Epoxypropoxy)phenyl]octahydro-4, 7-methano-5H-inden), Tris[4-(2,3-epoxypropoxy)phenyl]methan Isomere), Phenol basierte Epoxy Novolake und Kresol basierte Epoxy Novolake. Aliphatische Glycidylether sind beispielsweise 1,4-Butandiol-diglycidether, 1,6-Hexandioldiglycidylether, Trimethylolpropantriglycidylether, Pentaerythrittetra-glycidylether, 1,1,2,2-tetrakis [4-(2,3-epoxypropoxy)phenyl]ethan, Diglycidylether von Polypropylenglykol ($\alpha,\omega$-bis(2,3-epoxypropoxy)poly-(oxypropylen) (und von hydriertem Bisphenol A (2,2-bis[4-(2,3-epoxypropoxy)cyclohexyl]propan). Die Epoxid(meth)acrylate haben vorzugsweise ein zahlenmittleres Molgewicht $M_n$ von 200 bis 20.000, besonders bevorzugt von 200 bis 10.000 g/mol und ganz besonders bevorzugt von 250 bis 3.000 g/mol; der Gehalt an (Meth)acrylgruppen beträgt vorzugsweise 1 bis 5, besonders bevorzugt 2 bis 4 pro 1.000 g Epoxid-(meth)acrylat (bestimmt durch Gelpermeationschromatographie mit Polystyrol als Standard und Tetrahydrofuran als Elutionsmittel).

(Meth)acrylierte Poyl(meth)acrylate sind die entsprechenden Ester von $\alpha,\beta$-ethylenisch ungesättigten Carbonsäuren, bevorzugt von (Meth)acrylsäure, besonders bevorzugt von Acrylsäure mit Polyacrylatpolyolen, erhältlich durch Veresterung von Poly(meth)acrylatpolyolen mit (Meth)acrylsäure. Bei den Polyacrylatpolyolen kann es sich beispielsweise um solche handeln, wie sie oben bei den Zweikomponenten Beschichtungsmassen beschrieben worden sind.

Carbonat(meth)acrylate sind mit verschiedenen Funktionalitäten erhältlich. Das zahlenmittlere Molekulargewicht $M_n$ der Carbonat(meth)acrylate ist vorzugsweise kleiner 3.000 g/mol, besonders bevorzugt kleiner 1.500 g/mol, besonders bevorzugt kleiner 800 g/mol (bestimmt durch Gelpermeations-chromatographie mit Polystyrol als Standard, Lösemittel Tetrahydrofuran).Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure oder auch Umesterung mit (Meth)acrylsäureestern, wie es z.B. in EP 0 092 269 A1 beschrieben ist. Erhältlich sind sie auch durch Umsetzung von Phosgen, Harnstoffderivaten mit mehrwertigen, z.B. zweiwertigen Alkoholen. Denkbar sind auch (Meth)acrylate von Polycarbonatpolyolen, wie das Reaktions-produkt aus einem der genannten Di- oder Polyole und einem Kohlensäureester sowie einem hydroxylgruppenhaltigen (Meth)acrylat. Geeignete Kohlensäureester sind z.B. Ethylen-, 1,2-oder 1,3-Propylencarbonat, Kohlensäuredimethyl-, -diethyl- oder -dibutylester. Geeignete hydroxygruppenhaltige (Meth)acrylate sind beispielsweise 2-Hydroxyethyl(meth)acrylat, 2- oder 3-Hydroxypropyl(meth)acrylat, 1,4-Butandiol-mono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat. Vorzugsweise handelt es sich bei den Carbonat(meth)acrylaten um aliphatische Carbonat(meth)acrylate.

Ungesättigte Polyesterharze sind vorzugsweise aufgebaut aus den Komponenten:

    (a1) Maleinsäure oder deren Derivate,
    (a2) mindestens eine cyclische Dicarbonsäure oder deren Derivate,
    (a3) mindestens ein aliphatisches oder cycloaliphatisches Diol.

Unter Derivaten werden im Rahmen dabei bevorzugt verstanden

- die betreffenden Anhydride in monomerer oder auch polymerer Form,
- Mono- oder Dialkylester, bevorzugt Mono- oder Di-$C_1$-$C_4$-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen $C_1$-$C_4$ Alkyl-komponenten, besonders bevorzugt gemischte Methylethylester.

Enthält (B1a) eine Komponente (b), so ist diese vorzugsweise wenigstens ein Urethan(meth)acrylat.

Das Beschichtungsmittel (B1a) kann zudem ein Additiv als Komponente (c) enthalten. Der Begriff des Additivs ist dem Fachmann bekannt, beispielsweise aus dem Römpp Lexikon, "Lacke und Druckfarben", Thieme Verlag, 1998, Seite 13. Vorzugsweise wird als Komponente (c) wenigstens ein Rheologieadditiv eingesetzt. Auch dieser Begriff ist dem Fachmann bekannt, beispielsweise aus dem Römpp Lexikon, "Lacke und Druckfarben", Thieme Verlag, 1998, Seite 497. Die Begriffe "Rheologieadditiv", "rheologisches Additiv" und "Rheologiehilfsmittel" sind dabei austauschbar. Vorzugsweise ist das als Komponente (c) eingesetzte Additiv ausgewählt aus der Gruppe bestehend aus Verlaufmitteln, oberflächenaktiven Agentien wie Tensiden, Netz- und Dispergiermitteln, sowie Verdickungsmitteln, Thixotropiermitteln, Weichmachern und Gleit- und Antiblocking-Additiven sowie Mischungen davon. Diese Begriffe sind dem Fachmann ebenfalls bekannt, z.B. aus dem Römpp Lexikon, "Lacke und Druckfarben", Thieme Verlag, 1998. Als Verlaufmittel werden Komponenten bezeichnet, die durch Erniedrigung der Viskosität und/oder Oberflächenspannungen Beschichtungsmitteln zu eben verlaufenden Filmen verhelfen. Als Netz- und Dispergiermitteln werden Komponenten bezeichnet, die die Oberflächenspannung oder allgemein die Grenzflächenspannung herabsetzen. Als Gleit- und Antiblocking-Additive werden Komponenten bezeichnet, die das Verkleben (Blocken) reduzieren. Beispiele für kommerziell erhältliche Additive sind die Produkte Efka® SL 3259, Byk® 377, Tego® Rad 2500, Tego® Rad 2800,Byk® 394, Byk-SILCLEAN 3710, Silixan® A250, Novec FC 4430 und Novec FC 4432. Vorzugsweise wird als Additiv (c) wenigstens ein Poly(meth)acrylat und/oder wenigstens ein Siloxan wie wenigstens eine Oligosiloxan und/oder Polysiloxan und/oder wenigstens ein Fluor-haltiges Polymer wie ein Fluorhaltiger vorzugsweise aliphatischer Polyester eingesetzt. Besonders bevorzugt sind Siloxane als Komponente (c). Ganz besonders bevorzugt werden Silikon(meth)acrylate eingesetzt.

Das Beschichtungsmittel (B1a) kann wenigstens eine weitere von den Komponenten (a) und (b) und (c) verschiedene Komponente (d) enthalten wie beispielsweise Füllstoffe, Pigmente, thermisch aktivierbare Initiatoren wie z.B. Kaliumperoxodisulfat, Dibenzoylperoxid, Cyclohexanonperoxid, Di-tert.-Butylperoxid, Azobis-isobutyronitril, Cyclohexylsulfonylacetylperoxid, Diiso-propylpercarbonat, tert-Butylperoktoat oder Benzpinakol, Di-tert.-Butylperoxid, Cumolhydroperoxid, Dicumylperoxid, tert.-Butylperbenzoat, silylierte Pinakole, hydroxylgruppenhaltige Amin-N-Oxide, wie 2,2,6,6-Tetramethylpiperidin-N-oxyl und 4-Hydroxy-2,2,6,6-Tetramethylpiperidin-N-oxyl, und organische Lösemittel sowie Stabilisatoren. Vorzugsweise sind in (B1a) jedoch keine organischen Lösemittel enthalten. Komponente (c) kann in einer Menge in einem Bereich von 0 bis 15 Gew.-%, vorzugsweise in einem Bereich von 0 bis 12 Gew.-%, besonders bevorzugt in einem Bereich von 0 bis 10 Gew.-% in (B1a) enthalten sein, jeweils bezogen auf das Gesamtgewicht des Beschichtungsmittels (B1a).

Das Beschichtungsmittel (B1a) enthält vorzugsweise

wenigstens einen Photoinitiator als Komponente (a) in einer Menge in einem Bereich von 0,01 bis 15 Gew.-%, vorzugsweise in einem Bereich von 0,1 bis 12 Gew.-%, besonders bevorzugt in einem Bereich von 0,5 bis 10 Gew.-%,

die wenigstens eine Komponente (b) in einer Menge in einem Bereich von 40 bis 99 Gew.-%, vorzugsweise in einem Bereich von 45 oder >45 bis 90 Gew.-%, besonders bevorzugt in einem Bereich von 50 oder >50 wie 55 bis 85 Gew.-%, ganz besonders bevorzugt in einem Bereich von 55 oder 60 bis 80 Gew.-%,

das wenigstens eine Additiv als Komponente (c) in einer Menge in einem Bereich von 0,01 bis 5 Gew.-%, vorzugsweise in einem Bereich von 0,05 bis 4,5 Gew.-%, besonders bevorzugt in einem Bereich von 0,1 bis 4 Gew.-%, ganz besonders bevorzugt in einem Bereich von 0,2 oder 0,5 bis 3 Gew.-%,

jeweils bezogen auf das Gesamtgewicht des Beschichtungsmittels (B1a).

Vorzugsweise ist der Festkörpergehalt des Beschichtungsmittels (B1a) ≥80 Gew.-%, besonders bevorzugt ≥90 Gew.-%, ganz besonders bevorzugt ≥95 Gew.-%, insbesondere ≥98 oder ≥99 Gew.-%, am meisten bevorzugt 100 Gew.-%, jeweils bezogen auf das Gesamtgewicht des Beschichtungsmittels (B1a). Der Festkörpergehalt wird dabei mittels der nachstehend beschriebenen Methode ermittelt.

Vorzugsweise beträgt der Doppelbindungsumsatz der aus (B1a) erhaltenen zumindest teilweise ausgehärteten Beschichtung (B1) wenigstens 70%, besonders bevorzugt wenigstens 75%, noch bevorzugter wenigstens 80%, ganz besonders bevorzugt wenigstens 85%, insbesondere wenigstens 90%.

*Vorbehandlung*

Das erfindungsgemäße Verfahren umfasst eine vor der Durchführung von Schritt (2-i) und vor der Durchführung von Schritt (1-ii) Vorbehandlung der wenigstens einen Prägematrize (p1) des Prägewerkzeugs (P1) mit wenigstens einem organischen Lösemittel und/oder wenigstens einem Reaktivverdünner. Vorzugsweise umfasst diese Vorbehandlung ein Benetzen (Besprühen) der wenigstens einen Prägematrize (p1) mit wenigstens einem organischen Lösemittel und/oder wenigstens einem Reaktivverdünner. Vorzugsweise erfolgt das Benetzen mittels wenigstens einer Düse, besonders bevorzugt mittels wenigstens einer Ultraschalldüse. Vorzugsweise erfolgt das Benetzen durch Bildung eines Nebels, besonders bevorzugt in Form von Tröpfchen, der auf der Prägematrize (p1) des Prägewerkzeugs (P1) kondensiert und diese dadurch mit einem Flüssigkeitsfilm überzieht. Vorzugsweise wird die Prägematrize (p1) des Prägewerkzeugs (P1) vollständig benetzt, d.h. die komplette Prägematrize einschließlich aller Strukturerhebungen, insbesondere in den vollständigen Ausdehnungen der Strukturbreite und Strukturtiefe, wird benetzt.

Der Begriff des "organischen Lösemittels" ist dem Fachmann bekannt, beispielsweise aus der Richtlinie 1999/13/EG des Rates vom 11. März 1999 (darin als Lösungsmittel bezeichnet). Grundsätzlich kann jedes übliche dem Fachmann bekannte organische Lösemittel im erfindungsgemäß durchgeführten Vorbehandlungsschritt eingesetzt werden. Der Begriff des "Reaktivverdünners" ist dem Fachmann ebenfalls bekannt, beispielsweise aus dem Römpp, Lacke und Druckfarben, Thieme Verlag 1998, Seite 491. Demzufolge wird unter dem Begriff des "Reaktivverdünners" ein Verdünnungsmittel verstanden, das bei der Filmbildung Bestandteil des eingesetzten Bindemittels wird. Unter dem Begriff "Bindemittel" werden im Sinne der vorliegenden Erfindung wiederum in Einklang mit der DIN EN ISO 4618 (deutsche Fassung, Datum: März 2007) vorzugsweise die für die Filmbildung verantwortlichen nicht-flüchtigen Anteile einer Beschichtungsmittels verstanden. Darin enthaltene Pigmente und/oder Füllstoffe werden nicht unter den Begriff des Bindemittels subsumiert. Grundsätzlich kann jeder übliche dem Fachmann bekannte Reaktivverdünner im erfindungsgemäß durchgeführten Vorbehandlungsschritt eingesetzt werden.

Vorzugsweise ist das wenigstens eine organische Lösemittel ausgewählt aus der Gruppe bestehend aus ein- und mehrwertigen Alkoholen wie entsprechende $C_1$-$C_{12}$-Alkohole, beispielsweise Methanol, Ethanol, 1-Propanol, 2-Propanol, 1-Butanol, Ethylenglykol, Ethylglykol, Propylglykol, Butylglykol, Butyldiglykol, 1,2-Propandiol und/oder 1,3-Propandiol, Ethern, beispielsweise Diethylenglykoldimethylether, aliphatische Kohlenwasserstoffen, aromatische Kohlenwasserstoffen, beispielsweise Toluol und/oder Xylole, Ketonen, beispielsweise Aceton, N-Methylpyrrolidon, N-Ethylpyrrolidon, Methylisobutylketon, Isophoron, Cyclohexanon und/oder Methylethylketon, Estern, beispielsweise Methoxypropylacetat, Ethylacetat und/oder Butylacetat, Amiden, beispielsweise Dimethylformamid und Mischungen davon. Besonders bevorzugt sind ein- und mehrwertige Alkohole wie entsprechende $C_1$-$C_6$-Alkohole, ganz besonders bevorzugt sind entsprechende $C_1$-$C_4$-Alkohole wie Ethanol.

Vorzugsweise ist der wenigstens eine Reaktivverdünner ausgewählt aus der Gruppe bestehend aus monofunktionellen (Meth)acrylaten, difunktionellen (Meth)acrylaten, trifunktionellen (Meth)acrylaten und multifunktionellen wie beispielsweise tetra- und pentafunktionellen (Meth)acrylaten, und Mischungen davon.

Geeignete monofunktionelle (Meth)acrylate sind z.B. 2-Phenoxyethyl(meth)acrylat oder höherethoxylierte Phenoxy(meth)acrylate, Ethyldiglykol(meth)acrylat, Ethyltriglykol(meth)acrylat, 4-tert.-Butylcyclo-hexyl(meth)acrylat, Trimethylolpropanformalmono(meth)acrylat, Isobornyl(meth)acrylat, Tetrahydro-furfury(meth)acrylat, 2-(2-Ethoxyethoxy)ethyl(meth)acrylat, sowie Butyl-, Hexyl-, lauryl-, Stearyl-, Isodecyl-, Octyl- und Decyl(meth)acrylat und 2-Ethylhexyl(meth)acrylat.

Geeignete difunktionelle (Meth)acrylate sind z.B. Ethylenglykoldi(meth)acrylat, 1,2-Propandioldi(meth)acrylat, 1,3-Propandioldi(meth)acrylat, 1,4-Butan-dioldi(meth)acrylat, 1,3-Butandioldi(meth)acrylat, 1,5-Pentandioldi(meth)acrylat, 1,6-Hexandioldi(meth)acrylat, 1,8-Octandioldi(meth)acrylat, Neopentylglykoldi(meth)acrylat, 1,1-, 1,2-, 1,3- und 1,4-Cyclohexa-ndimethanoldi(meth)acrylat, 1,2-, 1,3- oder 1,4-Cyclohexandioldi(meth)acrylat, Glycerindi(meth)acrylat, Di(meth)acrylate von Zucker-alkoholen, wie beispielsweise Sorbit, Mannit, Diglycerol, Threit, Erythrit, Adonit (Ribit), Arabit (Lyxit), Xylit, Dulcit (Galactit), Maltit oder Isomalt.

Geeignete trifunktionelle (Meth)acrylate sind z. B. Trimethylol-propantri(meth)acrylat, Pentaerythrittri(meth)acrylat, Glycerintriacrylat, sowie Tri(meth)acrylate von Zucker-alkoholen, wie beispielsweise Sorbit, Mannit, Diglycerol, Threit, Erythrit, Adonit (Ribit), Arabit (Lyxit), Xylit, Dulcit (Galactit), Maltit oder Isomalt.

Geeignete multifuktionelle (Meth)acrylate sind z. B. Ditrimethylolpropanpenta- oder -hexa(meth)acrylat, Pentaerythrittetra(meth)acrylate, Poly(meth)acrylate von Zucker-alkoholen, wie beispielsweise Sorbit, Mannit, Diglycerol, Threit, Erythrit, Adonit (Ribit), Arabit (Lyxit), Xylit, Dulcit (Galactit), Maltit oder Isomalt.

*Verwendung*

Ein weiterer Gegenstand der vorliegenden Erfindung ist eine Verwendung eines wenigstens eine Prägematrize (p1) aufweisenden Prägewerkzeugs (P1) zur Übertragung einer Prägestruktur auf wenigstens einen Teil einer Oberfläche eines Beschichtungsmittel (B1a), dadurch gekennzeichnet, dass die wenigstens eine Prägematrize (p1) des Prägewerkzeugs (P1) vor der Übertragung mit wenigstens einem organischen Lösemittel und/oder wenigstens einem Reaktivverdünner vorbehandelt worden ist, und als Prägestruktur vorzugsweise Mikrostrukturen auf das Beschichtungsmittel (B1a) übertragen werden, die eine Strukturtiefe >30 μm aufweisen.

Alle im Zusammenhang mit dem erfindungsgemäßen Verfahren hierin zuvor beschriebene bevorzugte Ausführungsformen sind auch bevorzugte Ausführungsformen hinsichtlich der erfindungsgemäßen Verwendung.

**Bestimmungsmethoden**

1. Bestimmung des nicht-flüchtigen Anteils

Die Bestimmung des nicht-flüchtigen Anteils (des Festkörpers bzw. Festkörperanteil bzw. Festkörpergehalts) erfolgt gemäß DIN EN ISO 3251 (Datum: Juni 2008). Dabei werden 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nicht-flüchtigen Anteil.

2. Bestimmung der Abformgenauigkeit

Die Bestimmung der Abformgenauigkeit erfolgt mittels eines handelsüblichen Rasterkraftmikroskops (AFM) unter Verwendung eines handelsüblichen Cantilevers. Mittels AFM kann so zum Beispiel die Oberflächentopographie von einer bestimmten Gitterstruktur wie die des Prägewerkzeugs P1 mit einer Tiefe von beispielsweise 140 nm und einer Periode von beispielsweise 430 nm mit der Oberflächentopographie einer Masterfolie (B1F1) nach Prägung verglichen werden. Das Prägewerkzeug wird in diesem Fall absichtlich an einer bestimmten Stelle beschädigt, um so einen Bezugspunkt zu definieren. Durch diesen Bezugspunkt können die jeweils gleichen Bereiche der Referenz und der Replikation untersucht und miteinander verglichen werden. Die Abformgenauigkeit definiert dabei, wie genau eine bestimmte Referenzstruktur transferiert werden kann, wie zum Beispiel vom Prägewerkzeug P1 auf eine Masterfolie (B1F1). Wenn beispielsweise der untersuchte Bereich des Prägewerkzeugs P1 eine Gitterstruktur mit einer Tiefe von 140 nm aufweist, wird diese Referenztiefe dann verglichen mit der entsprechenden Höhe der Struktur, die an der Masterfolie (B1F1) bestimmt wird. Die prozentuale Änderung, die dabei der Abformgenauigkeit entspricht, wird dabei definiert als:

$$\Delta h = 100 * \left(1 - \frac{h_m}{h_r}\right)$$

$\Delta h$ entspricht hier der prozentualen Änderung, $h_m$ der Höhe der Struktur des untersuchten Bereichs der Masterfolie und $h_r$ der entsprechenden Tiefe der Struktur des untersuchten Bereichs des Prägewerkzeugs. Diese prozentuale Änderung, also die Abformgenauigkeit, wird auch als 'Schrumpf' bezeichnet. Je geringer die Werte für $\Delta h$ sind, desto besser ist die Abformgenauigkeit.

**Beispiele und** Vergleichsbeispiele

Die nachfolgenden Beispiele und Vergleichsbeispiele dienen der Erläuterung der Erfindung, sind jedoch nicht einschränkend auszulegen.

Sofern nicht anders angeführt, handelt es sich bei den Angaben in Teilen um Gewichtsteile und bei Angaben in Prozenten.

1. Eingesetzte Rohstoffe und Materialien

Laromer® UA 9033 - aliphatisches Urethanacrylat der Firma Firma BASF AG Irgacure® 500 - kommerziell erhältlicher Photoinitiator der Firma BASF AG Byk-057 - kommerziell erhältlicher Entschäumer der Firma BYK Chemie GmbH

2. Beispiele

*Beispiel 1: Herstellung einer strukturierten Folie (mit Mikrostruktur):*

Eine Endlosmatrize mit der gewünschten Positivstruktur wird unter Einsatz einer Rolle-zu-Rolle Prägemaschine mit einer Prägevorrichtung aus Nickel, welche die gewünschte Negativstruktur trägt, hergestellt. Dazu wird eine transparente PET-Folienbahn als Substrat eingesetzt. Diese wird zunächst von einer Rolle abgewickelt und über eine System von Umlenkwalzen und einer Bahnreinigung zu einer Lackauftragseinheit geführt, in der die Beschichtungsmasse mittels *Slot-die Coating* aufgetragen wird. Dies ermöglicht eine genaue Steuerung der Auftragsmenge des Lackes. Durch Temperierung des *Slot-Coaters* kann die Flussmenge pro Zeiteinheit verändert werden, um so auch das Lackauftragsbild zusätzlich zu beeinflussen. Als Beschichtungsmasse wird eine Mischung aus 93,7 Gewichtsteilen Laromer® UA 9033, 0,7 Gewichtsteilen Byk-057 und 5,6 Gewichtsteilen Irgacure® 500 eingesetzt. Die mit der gewünschten Prägestruktur zu versehene Oberfläche der Folienbahn wird dabei mit einem Anpressdruck straff gespannt über einen Teilabschnitt der Mantelfläche der Druckwalze geführt, die in einem anderen Teilabschnitt mit der vorgenannten Beschichtungsmasse versehen wird. Bei der Rotation der Druckwalze und dem Führen der Folienbahn über dieselbe wird die Beschichtungsmasse auf die Oberfläche der Folienbahn aufgebracht und haftet dort an. In demselben Schritt werden dann auch Abbilder der Negativstrukturen der Druckwalze als Positivstruktur in die Lackschicht eingeprägt. Die als Prägewerkzeug eingesetzte Druckwalze wurde vor ihrem Einsatz mit Ethanol benetzt. Die Benetzung findet über eine Ultraschalldüse statt. Die Verneblung führt zu einer feinsten Tröpfchenbildung. Der in Richtung der Prägewalze geleitete Nebel aus Lösemittel kondensiert auf der Oberfläche der strukturierten Prägewalze. Da die Tröpfchen im Vergleich zu den Strukturen deutlicher kleiner sind, können diese in die "Löcher" der Strukturen eindringen und das Material des Prägewerkzeugs komplett mit einem Flüssigkeitsfilm überziehen. Noch während die Prägevorrichtung in Kontakt mit dem Beschichtungsmaterial ist, erfolgt die Aushärtung der Beschichtungsmasse durch eine UV-LED Lampe (Wellenlänge 365 nm, Intensität 80%) aus Richtung der unbelackten Seite der Folie. Die typische Leistung der verwendeten UV-Anlage beträgt ca. 1300 mW/cm². Am Ende des Prägeprozesses wird die Folie mit dem auf der Oberfläche aufgebrachten, die Mikrostrukturen aufweisenden und ausgehärteten Lack von der Oberfläche der Druckwalze abgezogen, wobei sich die Strukturen aus den Negativformen lösen. Auf diese Weise wird eine Endlosbahn einer mit einer strukturierten Oberfläche versehenen Folie erhalten und dann aufgewickelt.

3. Untersuchungen der strukturierten Folie

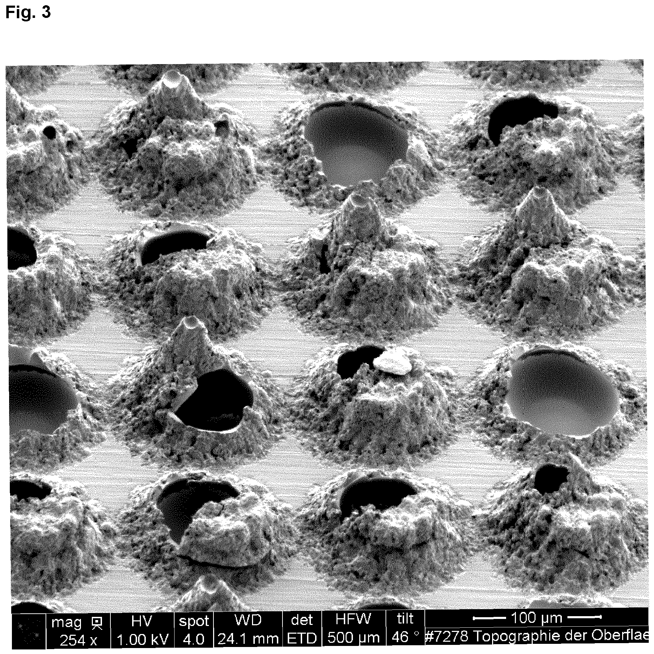

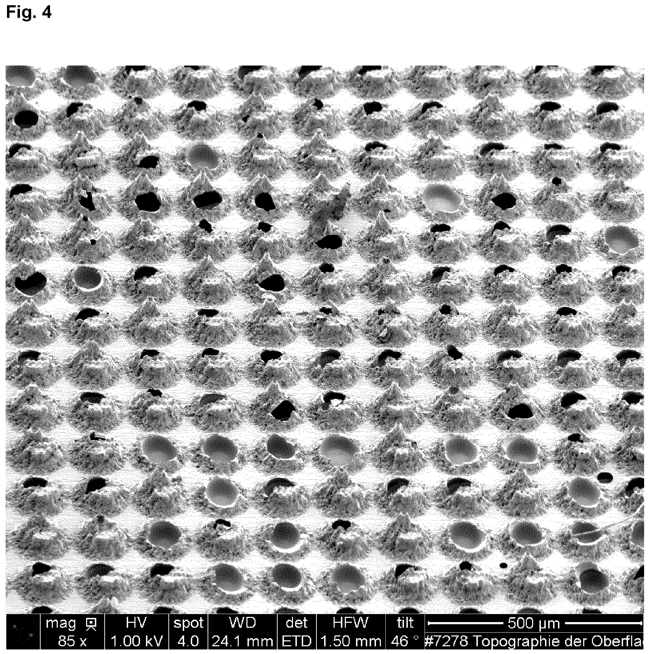

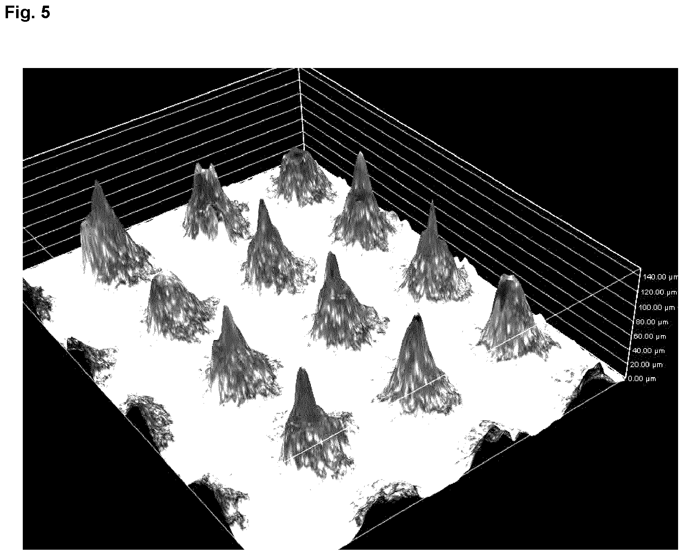

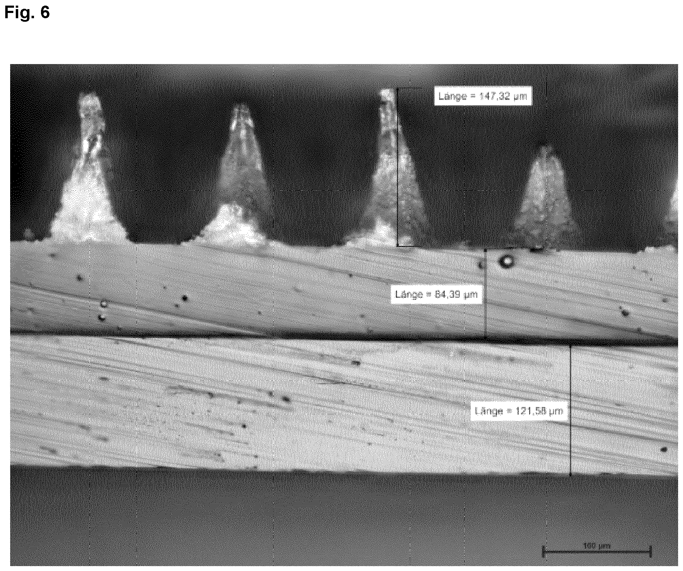

Es wurde gefunden, dass durch die erfolgte Vorbehandlung Mikrostrukturen, insbesondere mit Strukturtiefen >40 $\mu$m und Aspektverhältnissen >1, in einer sehr hohen Abformgenauigkeit auch in hoher Geschwindigkeit auf das zu prägende Beschichtungsmittel übertragen werden können, ohne dass bei der Prägung Modulationstiefe verloren geht. Dies gilt auch und insbesondere für solche Strukturen, die einzelne Strukturelemente aufweisen, die nicht miteinander verbunden sind, sondern zumindest teilweise als einzelne "Löcher" auf der Oberfläche der Prägematrize des Prägewerkzeugs vorliegen. Obwohl bei einer solchen Anordnung der Strukturelemente innerhalb der Prägematrize beim Prägevorgang die Luft nicht zu den Seiten hin entweichen kann, sondern stattdessen aus den einzelnen Strukturelementen ("Löchern") herausgedrängt werden muss, ermöglicht das erfindungsgemäße Verfahren eine defektfreie Übertragung der Prägestruktur, insbesondere ohne Kraterbildung. Eine solche unerwünschte Kraterbildung in Form von Luftblasen, die ohne die erfindungsgemäße Vorbehandlung auftreten kann, ist aus den REM-Aufnahmen der **Fig.** 3 und **Fig.** 4 ersichtlich. Dagegen wird mit der erfindungsgemäßen Vorbehandlung eine solche Kraterbildung vermieden, wie aus den Mikroskop-Aufnahmen der Fig. 5 und Fig. 6 ersichtlich ist.

**Patentansprüche**

1. Ein Verfahren zur Übertragung einer Prägestruktur unter Verwendung eines Prägewerkzeugs (P1), welches wenigstens die Schritte 1-i und 2-i oder 1-ii und 2-ii umfasst, nämlich

   1-i Applizieren eines Beschichtungsmittels (B1a) auf wenigstens einen Teil einer Oberfläche eines Substrats (F1) unter Erhalt eines Verbunds (B1aF1) und
   2-i zumindest teilweises Prägen des zumindest teilweise auf die Oberfläche des Substrats (F1) applizierten Beschichtungsmittels (B1a) mittels wenigstens eines wenigstens eine Prägematrize (p1) aufweisenden Prägewerkzeugs (P1), oder
   1-ii Applizieren eines Beschichtungsmittels (B1a) auf wenigstens einen Teil einer zumindest teilweise geprägten Oberfläche einer Prägematrize (p1) eines Prägewerkzeugs (P1) und
   2-ii Applizieren eines Substrats (F1) auf wenigstens einen Teil der Oberfläche des auf die Prägematrize (p1) applizierten Beschichtungsmittels (B1a) unter Erhalt eines auf (p1) befindlichen Verbunds (B1aF1),
   **dadurch gekennzeichnet, dass** die wenigstens eine Prägematrize (p1) des Prägewerkzeugs (P1) vor der Durchführung von Schritt 2-i und vor der Durchführung von Schritt 1-ii mit wenigstens einem organischen Lösemittel und/oder wenigstens einem Reaktivverdünner vorbehandelt wird, und durch Schritt 2-i und Schritt 1-ii Mikrostrukturen als Prägestruktur auf das Beschichtungsmittel (B1a) übertragen werden, die eine Strukturtiefe >30 $\mu$m aufweisen.

2. Das Verfahren gemäß Anspruch 1, **dadurch gekennzeichnet, dass** die vor Durchführung von Schritt 2-i und Schritt 1-ii zu erfolgende Vorbehandlung ein Benetzen der wenigstens einen Prägematrize (p1) mit wenigstens einem organischen Lösemittel und/oder wenigstens einem Reaktivverdünner umfasst.

3. Das Verfahren gemäß Anspruch 1 oder 2, **dadurch gekennzeichnet, dass** die vor Durchführung von Schritt 2-i und Schritt 1-ii zu erfolgende Vorbehandlung unter Einsatz wenigstens einer Ultraschalldüse erfolgt.

4. Das Verfahren gemäß einem der vorstehenden Ansprüche **dadurch gekennzeichnet, dass** das wenigstens eine zur Vorbehandlung eingesetzte organische Lösemittel ausgewählt ist aus der Gruppe der $C_1$-$C_4$-Alkohole und der wenigstens eine zur Vorbehandlung eingesetzte Reaktivverdünner ausgewählt ist aus der Gruppe bestehend aus monofunktionellen, difunktionellen, trifunktionellen und multifunktionellen (Meth)acrylaten sowie Mischungen davon.

5. Das Verfahren gemäß einem der vorstehenden Ansprüche **dadurch gekennzeichnet, dass** durch Schritt 2-i und Schritt 1-ii Mikrostrukturen und/oder Nanostrukturen als Prägestruktur auf das Beschichtungsmittel (B1a) übertragen werden.

6. Das Verfahren gemäß einem der vorstehenden Ansprüche, **dadurch gekennzeichnet, dass** durch Schritt 2-i und Schritt 1-ii Mikrostrukturen als Prägestruktur auf das Beschichtungsmittel (B1a) übertragen werden, die eine Strukturtiefe >40 $\mu$m aufweisen.

7. Das Verfahren gemäß einem der vorstehenden Ansprüche, **dadurch gekennzeichnet, dass** das Aspektverhältnis der durch Schritt 2-i und Schritt 1-ii auf das Beschichtungsmittel (B1a) übertragenen Prägestruktur >1 ist.

8. Das Verfahren gemäß einem der vorstehenden Ansprüche, **dadurch gekennzeichnet, dass** eine aus dem Beschichtungsmittel (B1a) erhältliche Beschichtung (B1) und die wenigstens eine Prägematrize (p1) des Prägewerkzeugs (P1) zueinander spiegelbildliche Prägestrukturen aufweisen.

9. Das Verfahren gemäß einem der vorstehenden Ansprüche, **dadurch gekennzeichnet, dass** es nach Durchführung des Schritt 2-i und des Schritt 1-ii wenigstens einen weiteren Schritt 3 umfasst, nämlich

   3 eine zumindest teilweise Aushärtung des nach Schritt 2-i bzw. Schritt 2-ii erhaltenen zumindest teilweise geprägten Beschichtungsmittels (B1a) innerhalb des Verbunds (B1aF1) unter Erhalt eines Verbunds (B1F1) aus Substrat (F1) und zumindest teilweise geprägter und zumindest teilweise ausgehärteter Beschichtung (B1), wobei das Beschichtungsmittel (B1a) während der gesamten Dauer der zumindest teilweisen Aushärtung in Kontakt mit der wenigstens einen Prägematrize (p1) des wenigstens einen Prägewerkzeugs (P1) ist, und
optional eine Schritt 4 umfasst, nämlich
4 ein Entfernen des nach Schritt 3 erhaltenen Verbunds (B1F1) von der Prägematrize (p1) des Prägewerkzeug (P1).

10. Das Verfahren gemäß einem der vorstehenden Ansprüche, **dadurch gekennzeichnet, dass** das Beschichtungsmittel (B1a) ein strahlenhärtendes Beschichtungsmittel ist.

11. Das Verfahren gemäß einem der vorstehenden Ansprüche, **dadurch gekennzeichnet, dass** der Festkörpergehalt des Beschichtungsmittels (B1a) ≥90 Gew.-% ist, bezogen auf das Gesamtgewicht des Beschichtungsmittels (B1a).

12. Das Verfahren gemäß einem der vorstehenden Ansprüche, **dadurch gekennzeichnet, dass** das Beschichtungsmittel (B1a)
wenigstens eine Komponente (b) aufweist, die mindestens eine Kohlenstoffdoppelbindung enthält und die in einer Menge in einem Bereich von 40 bis 95 Gew.-% darin enthalten ist.

13. Das Verfahren gemäß einem der vorstehenden Ansprüche, **dadurch gekennzeichnet, dass** das Beschichtungsmittel (B1a) wenigstens ein monofunktionelles, difunktionelles, trifunktionelles und/oder multifunktionelles (Meth)acrylat als Komponente (b) umfasst.

14. Das Verfahren gemäß einem der vorstehenden Ansprüche, **dadurch gekennzeichnet, dass** es sich bei dem Substrat (F1) um eine sich vorzugsweise bewegende Folienbahn handelt.

15. Eine Verwendung eines wenigstens eine Prägematrize (p1) aufweisenden Prägewerkzeugs (P1) zur Übertragung einer Prägestruktur auf wenigstens einen Teil einer Oberfläche eines Beschichtungsmittel (B1a), **dadurch gekennzeichnet, dass** die wenigstens eine Prägematrize (p1) des Prägewerkzeugs (P1) vor der Übertragung mit wenigstens einem organischen Lösemittel und/oder wenigstens einem Reaktivverdünner vorbehandelt worden ist, und als Prägestruktur Mikrostrukturen auf das Beschichtungsmittel (B1a) übertragen werden, die eine Strukturtiefe >30 $\mu$m aufweisen.

**Claims**

1. A method for transferring an embossed structure using an embossing tool (P1), which comprises at least the steps 1-i and 2-i or 1-ii and 2-ii, specifically

    1-i applying a coating composition (B1a) to at least a part of a surface of a substrate (F1), to give a composition (B1aF1), and
    2-i at least partially embossing the coating composition (B1a), applied at least partially to the surface of the substrate (F1), by means of at least one embossing tool (P1) comprising at least one embossing die (p1),
    or
    1-ii applying a coating composition (B1a) to at least a part of an at least partially embossed surface of an embossing die (p1) of an embossing tool (P1) and
    2-ii applying a substrate (F1) to at least a part of the surface of the coating composition (B1a), applied to the embossing die (p1), to give a composite (B1aF1) on (p1), which comprises pretreating the at least one embossing die (p1) of the embossing tool (P1), before the implementation of step 2-i and before the implementation of step 1-ii, with at least one organic solvent and/or at least one reactive diluent, and, through step 2-i and step 1-ii, transferring microstructures having a structure depth > 30 $\mu$m as embossed structure onto the coating composition (B1a).

2. The method according to claim 1, wherein the pretreatment to be carried out before implementation of step 2-i and step 1-ii comprises wetting the at least one embossing die (p1) with at least one organic solvent and/or at least one reactive diluent.

3. The method according to claim 1 or 2, wherein the pretreatment to be carried out before implementation of step 2-i and step 1-ii takes place using at least one ultrasonic nozzle.

4. The method according to any one of the preceding claims, wherein the at least one organic solvent used for the pretreatment is selected from the group of $C_1$-$C_4$ alcohols, and the at least one reactive diluent used for the pretreatment is selected from the group consisting of monofunctional, difunctional, trifunctional and polyfunctional (meth)acrylates and also mixtures thereof.

5. The method according to any one of the preceding claims, wherein through step 2-i and step 1-ii microstructures and/or nanostructures are transferred as embossed structure onto the coating composition (B1a).

6. The method according to one of the preceding claims, wherein through step 2-i and step 1-ii microstructures having a structure depth > 40 $\mu$m are transferred as embossed structure onto the coating composition (B1a).

**7.** The method according to any one of the preceding claims, wherein the aspect ratio of the embossed structure transferred by step 2-i and step 1-ii onto the coating composition (B1a) is > 1.

**8.** The method according to any one of the preceding claims, wherein a coating (B1) obtainable from the coating composition (B1a), and the at least one embossing die (p1) of the embossing tool (P1), have embossed structures which are mirror images of one another.

**9.** The method according to any one of the preceding claims, which comprises, after implementation of step 2-i and of step 1-ii, at least one further step 3, specifically

3 at least partially curing the at least partially embossed coating composition (B1a), obtained after step 2-i or step 2-ii, within the composite (B1aF1), to give a composite (B1F1) composed of substrate (F1) and of at least partially embossed and at least partially cured coating (B1), where throughout the duration of the at least partial curing the coating composition (B1a) is in contact with the at least one embossing die (p1) of the at least one embossing tool (P1), and optionally comprises a step 4, specifically 4 removing the composite (B1F1) obtained after step 3 from the embossing die (p1) of the embossing tool (P1).

**10.** The method according to any one of the preceding claims, wherein the coating composition (B1a) is a radiation-curing coating composition.

**11.** The method according to any one of the preceding claims, wherein the solids content of the coating composition (B1a) is ≥ 90 wt%, based on the total weight of the coating composition (B1a).

**12.** The method according to any one of the preceding claims, wherein the coating composition (B1a) comprises at least one component (b) which comprises at least one carbon double bond and which is present therein in an amount in a range from 40 to 95 wt%.

**13.** The method according to any one of the preceding claims, wherein the coating composition (B1a) comprises at least one monofunctional, difunctional, trifunctional and/or polyfunctional (meth)acrylate as component (b).

**14.** The method according to any one of the preceding claims, wherein the substrate (F1) is a preferably moving film web.

**15.** The use of an embossing tool (P1) comprising at least one embossing die (p1) for transferring an embossed structure to at least a part of a surface of a coating composition (B1a), wherein the at least one embossing die (p1) of the embossing tool (P1) has been pretreated, before the transfer, with at least one organic solvent and/or at least one reactive diluent, and the embossed structure transferred onto the coating composition (B1a) comprises microstructures having a structure depth > 30 μm.

**Revendications**

**1.** Procédé de transfert d'une structure en relief en utilisant un outil (P1) d'aménagement de reliefs, qui comprend au moins les étapes 1-i et 2-i ou 1-ii et 2-ii, à savoir

1-i appliquer un agent de revêtement (Bla) sur au moins une partie d'une surface d'un substrat (F1) pour obtenir un composite (B1aF1) et 2-i aménager au moins partiellement des reliefs dans l'agent de revêtement (Bla) appliqué au moins partiellement sur la surface du substrat (F1) au moyen d'au moins un outil (P1) d'aménagement de reliefs comprenant au moins une matrice (p1) d'aménagement de reliefs, ou 1-ii appliquer un agent de revêtement (Bla) sur au moins une partie d'une surface, comprenant au moins partiellement des reliefs, d'une matrice (p1) d'aménagement de reliefs d'un outil (P1) d'aménagement de reliefs, et 2-ii appliquer un substrat (F1) sur au moins une partie de la surface de l'agent de revêtement (Bla) appliqué sur la matrice (p1) d'aménagement de reliefs pour obtenir un composite (B1aF1) sur (p1), **caractérisé en ce que** ladite au moins une matrice (p1) d'aménagement de reliefs de l'outil (P1) d'aménagement de reliefs est prétraitée avec au moins un solvant organique et/ou au moins un diluant réactif avant la mise en œuvre de l'étape 2-i et avant la mise en œuvre de l'étape 1-ii, et, par l'étape 2-i et l'étape 1-ii, des microstructures sont transférées sur l'agent de revêtement (Bla) en tant que structures en relief, qui présentent une profondeur de structure >30 μm.

**2.** Procédé selon la revendication 1, **caractérisé en ce que** le prétraitement à effectuer avant la mise en œuvre de l'étape 2-i et de l'étape 1-ii comprend le mouillage de ladite au moins une matrice (p1) d'aménagement de reliefs avec au moins un solvant organique et/ou au moins un diluant réactif.

**3.** Procédé selon la revendication 1 ou la revendication 2, **caractérisé en ce que** le prétraitement à effectuer avant la mise en œuvre de l'étape 2-i et de l'étape 1-ii est réalisé en utilisant au moins une buse à ultrasons.

4. Procédé selon l'une des revendications précédentes, **caractérisé en ce que** ledit au moins un solvant organique utilisé pour le prétraitement est choisi dans le groupe des alcools en $C_1$-$C_4$ et ledit au moins un diluant réactif utilisé pour le prétraitement est choisi dans le groupe constitué par les (méth)acrylates monofonctionnels, difonctionnels, trifonctionnels et multifonctionnels ainsi que les mélanges de ceux-ci.

5. Procédé selon l'une des revendications précédentes, **caractérisé en ce que**, par l'étape 2-i et l'étape 1-ii, des microstructures et/ou des nanostructures sont transférées sur l'agent de revêtement (Bla) en tant que structures en relief.

6. Procédé selon l'une des revendications précédentes, **caractérisé en ce que**, par l'étape 2-i et l'étape 1-ii, des microstructures sont transférées sur l'agent de revêtement (Bla) sous forme de structures en relief, qui ont une profondeur de structure >40 $\mu$m.

7. Procédé selon l'une des revendications précédentes, **caractérisé en ce que** le rapport d'aspect de la structure en relief transférée sur l'agent de revêtement (Bla) par l'étape 2-i et l'étape 1-ii est >1.

8. Procédé selon l'une des revendications précédentes, **caractérisé en ce qu'**un revêtement (B1) apte à être obtenu à partir de l'agent de revêtement (Bla) et ladite au moins une matrice (p1) d'aménagement de reliefs de l'outil (P1) d'aménagement de reliefs présentent des structures d'aménagement de reliefs, qui sont symétriques les unes par rapport aux autres.

9. Procédé selon l'une des revendications précédentes, **caractérisé en ce qu'**il comprend, après la mise en œuvre de l'étape 2-i et de l'étape 1-ii, au moins une autre étape 3, à savoir

> 3 un durcissement au moins partiel de l'agent de revêtement (Bla) au moins partiellement pourvu de reliefs obtenu après l'étape 2-i ou l'étape 2-ii à l'intérieur du composite (B1aF1) pour obtenir un composite (B1F1) constitué d'un substrat (F1) et d'un revêtement (B1) au moins partiellement pourvu de reliefs et au moins partiellement durci, l'agent de revêtement (Bla) étant en contact avec ladite au moins une matrice (p1) d'aménagement de reliefs dudit au moins un outil (P1) d'aménagement de reliefs pendant toute la durée du durcissement au moins partiel, et optionnellement, comprenant une étape 4, à savoir
4 un retrait du composite (B1F1) obtenu à l'étape 3 hors de la matrice (p1) d'aménagement de reliefs de l'outil (P1) d'aménagement de reliefs.

10. Procédé selon l'une des revendications précédentes, **caractérisé en ce que** l'agent de revêtement (Bla) est un agent de revêtement durcissant par rayonnement.

11. Procédé selon l'une des revendications précédentes, **caractérisé en ce que** la teneur en solides de l'agent de revêtement (Bla) est ≥90 % en poids, par rapport au poids total de l'agent de revêtement (B1a).

12. Procédé selon l'une des revendications précédentes, **caractérisé en ce que** l'agent de revêtement (Bla) comprend au moins un composant (b) qui contient au moins une double liaison carbone-carbone et qui est contenu dans celui-ci en une quantité comprise entre 40 et 95 % en poids.

13. Procédé selon l'une des revendications précédentes, **caractérisé en ce que** l'agent de revêtement (Bla) comprend au moins un (méth)acrylate monofonctionnel, difonctionnel, trifonctionnel et/ou multifonctionnel en tant que composant (b).

14. Procédé selon l'une des revendications précédentes, **caractérisé en ce que** le substrat (F1) est une bande de film, de préférence en mouvement.

15. Utilisation d'un outil (P1) d'aménagement de reliefs comprenant au moins une matrice (p1) d'aménagement de reliefs pour transférer une structure à reliefs sur au moins une partie d'une surface d'un agent de revêtement (B1a), **caractérisée en ce que** ladite au moins une matrice (p1) d'aménagement de reliefs de l'outil (P1) d'aménagement de reliefs a été prétraitée avant le transfert avec au moins un solvant organique et/ou au moins un diluant réactif, et **en ce que** des microstructures sont transférées sur l'agent de revêtement (Bla) en tant que structures en relief, qui ont une profondeur de structure >30 $\mu$m.

**Fig. 1**

**Fig. 2**

**Fig. 3**

| mag ⬚ | HV | spot | WD | det | HFW | tilt | ——— 100 µm ——— |
|---|---|---|---|---|---|---|---|
| 254 x | 1.00 kV | 4.0 | 24.1 mm | ETD | 500 µm | 46 ° | #7278 Topographie der Oberflae |

**Fig. 4**

| mag 🖳 | HV | spot | WD | det | HFW | tilt | 500 µm |
|---|---|---|---|---|---|---|---|
| 85 x | 1.00 kV | 4.0 | 24.1 mm | ETD | 1.50 mm | 46 ° | #7278 Topographie der Oberfla |

Fig. 5

**Fig. 6**

# EP 3 976 344 B1

**IN DER BESCHREIBUNG AUFGEFÜHRTE DOKUMENTE**

**In der Beschreibung aufgeführte Patentdokumente**

- US 2014110371 A1
- DE 102004012067 A1
- WO 2005047549 A1
- DE 102007061980 A1
- WO 8809252 A1
- WO 9418609 A1
- WO 2009121357 A1
- DE 4132476 A1
- EP 0092269 A1

**In der Beschreibung aufgeführte Nicht-Patentliteratur**

- **E. ARZT et al.** *PNAS*, 2003, vol. 100, 10603-10606
- Lacke und Druckfarben. Römpp Lexikon. Thieme Verlag, 1998, 13
- Lacke und Druckfarben. Römpp Lexikon. Thieme Verlag, 1998, 497
- Lacke und Druckfarben. Römpp Lexikon. Thieme Verlag, 1998
- Römpp, Lacke und Druckfarben. Thieme Verlag, 1998, 491